# EUROPÄISCHE PATENTANMELDUNG

(11) **EP 2 108 901 A2**
(43) Veröffentlichungstag der Anmeldung: **14.10.2009**
(21) Anmeldenummer: 09005081.6
(22) Anmeldetag: 07.04.2009
(51) Int. Cl.: F24J 2/54

(54) **Vorrichtung zur Bereitstellung von Funktionsflächen zur Einstellung von Solar-, Antennen- und/oder Funkanlagen**

(30) Priorität: 09.04.2008 DE 102008018114
(71) Anmelder: Spiegel, Werner, 42897 Remscheid (DE)
(72) Erfinder: Spiegel, Werner, 42897 Remscheid (DE)
(74) Vertreter: Ring & Weisbrodt

(57) **Zusammenfassung**

Die vorliegende Erfindung betrifft eine Vorrichtung zur Bereitstellung von Funktlonsflächen zur Einstellung von Solar- und/oder Antennenanlagen mit einem Trägersystem bzw, einer Tragfläche (10) für Solar- oder Antennenmodule, wobei die Lage der Tragfläche (10) zum Untergrund (9) einstellbar ist, die gekennzeichnet Ist durch wenigstens zwei an- oder aufeinander drehbar gelagerte, keilförmig ausgebildete mit Drehlagern verbundene Elemente (1, 2; 3, 4; 5, 6, 7 8, 9, 10), mit jeweils unter einem spitzen Winkel (α1, α2, α3, α4, α5, α6, α7, α8) zusemmenlaufender Lagerfläche (L1; L2; L3; L4) und Funktionsfläche (F1, F2; F3, F4; F5, F8), deren Lage zueinander durch relative Verdrehung einstellbar ist, Wobei die Lagerflächen (L1; L2; L3; L4) der kellförmigen Elemente (1, 2; 3, 4; 5, 6, 7 8) einander zugewandt sind, die Funktlonstlächen (F1, F2; F3, F4; F5, F8) der keilförmigen Elemente (1, 2; 3, 4; 5, 6, 7 8) voneinander abgewandt sind und durch relative Verdrehung der keilförmigen Elemente (1, 2; 3, 4; 5, 6, 7 8) gegeneinander die Lage der Funktionsflächen (F1, F2; F3, F4; F5, F8) der keilförmigen Elemente (1, 2; 3, 4; 5, 6, 7 8) zueinander einstellbar ist, wobei eine der Funktlonsflächen vorzugsweise drehbar an oder auf dem Untergrund (Basis, 9) und die andere Funktionsfläche die Tragfläche (10) ausbildet oder ein Auflager für die Tragfläche (10) bereitstellend ausgebildet Ist. Gegenüber dem Stand der Technik realisiert die vorliegende Erfindung sowohl die dreldimensionale bzw. 2-achsiale Ausrichtung von Funktionsflächen, vorzugsweise mit nur einem ortsfesten Antrieb, beispielsweise mit axialer Drehwinkelübertragung, als auch die frei einstellbare Lage des Ruhe- oder Drehpols der Funktionsflächen und der Tragfläche beziehungsweise eines Funktionselementes durch eine variable oder fest einstellbare Exzentrizität der Drahlagerachsen, vorzugsweise in den Lagerflächen (vergleiche beispielsweise L1 und L3 in Figur 5 und 6). Vorteilhafterweise werden zwei Keilelemente verwendet, verbunden mit einem Drehlager welches eine Exzentrizität der Drehlagerachse des oberen Kellelementes aufweist, die es vorzugsweise erlaubt, die Funktionsfläche von senkrecht (90° gegenüber der gedachten horizontalen Grundfläche (z.B. Geländeoberfläche)) bis horizontal ausrichten zu können. Dies ermöglicht, das Schadenspotential durch Schneelasten (Vertikallasten) und Insbesondere Windlasten (Horlzontallasten) wirksam zu vermindem bzw. Schäden daraus zu vermeiden, z.B. durch Horizontalstellung bei Sturm. Vorteilhafterwelse wird die Verbindung der Funktionsfläche auf dem oberen Keilelement derart vorgenommen, dass die Drehachse des oberen Keilelementes etwa durch den Masseschwerpunkt der gesamten oberen Funktionseinheit einschließlich Nutzlast verläuft.

## Beschreibung

Die vorliegende Erfindung betrifft eine Vorrichtung zur Einstellung oder Nachführung von Solar-, Antennen- oder Funkanlagen, wobei die Ausrichtung der Träger derartiger oder ähnlicher Funktionsmodule 2-achsial einstellbar ist.

Derartige Vorrichtungen von Nachführsystemen sind im Stand der Technik in verschiedenen Ausgestaltungen bekannt, beispielsweise als sogenannte "Mover" oder "Tracking Systeme". Eingesetzt werden entsprechende Vorrichtungen insbesondere zur Nachführung solcher Anlagen z.B. nach dem Sonnenstand oder der Sattelitenposition. Zur Erzielung eines besseren Wirkungsgrades gegenüber stationären Aufstellung derartiger Funktionseinheiten oder der 1-achsialen Nachführung ist die die 2-achsiale Einstellbarkeit und Nachführung vorteilhaft.

Im Stand der Technik sind verschiedene, zwei-achsial verstellbare Funktionsflächen mit zueinander einstellbarer Lage bereitstellende Vorrichtungen für verschiedenste Anwendungen bekannt. Derartige Vorrichtungen werden insbesondere zur Einstellung von Winkel-, Schräg- und/oder Kipplagen zwischen zwei Ebenen verwendet, die in der Regel direkt durch die Funktionsflächen und/oder indirekt durch entsprechende auf und/oder an den Funktionsflächen angeordneten Funktionselementen bereitgestellt werden. Zur Einstellbarkeit der Lage der Funktionsflächen beziehungsweise der an und/oder auf diesen bereitgestellten Funktionselemente zueinander weisen die Vorrichtungen unter anderem insbesondere senkrecht zueinander stehende Dreh- beziehungsweise Kippachsen, Kugelgelenke und/oder dergleichen die Einnahme von verschiedenen Winkellagen ermöglichende Mittel auf.

Anwendung finden entsprechende Vorrichtungen beispielsweise in und/oder für Einrichtungen, die einer Ausrichtung ihrer Lage im Raum bedürfen, beispielsweise

Antennen, Solarkollektoren oder dergleichen, Vorrichtungen zum Üben von Golfschlägen aus Schräglagen, Einrichtungen zum Bestimmen und/oder Einstellen von Winkellagen, beispielsweise sogenannten Winkelmessern beziehungsweise Winkellehren oder dergleichen, Drehgestellen, Drehscheiben, Drehköpfen, Spielgeräten, beispielsweise Karussellen oder dergleichen zur Unterhaltung dienenden Fahrgeschäften, und ferner als Verbindungs- und/oder Konstruktionselement, beispielsweise für Platten- und/oder Profilelemente, beispielsweise als Verbindungselement für Gipskartonplatten für den Trockenausbau, als Konstruktions- und Verbindungselement für Profile für Messestände, Zeltgestelle oder dergleichen, und/oder dergleichen Einrichtungen.

In Abhängigkeit der jeweiligen Anwendung ist mitunter wenigstens eine der Funktionsflächen hinsichtlich Ihrer Lage über die jeweilige Dreh- beziehungsweise Kippachse, das Kugelgelenk und/oder dergleichen Konstruktionsmittel mittels eines Antriebs zumindest teilautomatisch verstellbar. Anwendung findet eine derartige Ausgestaltung beispielsweise bei Einrichtungen die mitunter einer Nachführung hinsichtlich Ihrer Lage bedürfen, beispielsweise Antennen, Solarkollektoren oder dergleichen Einrichtungen.

Nachteilig bei den bisher bekannten Vorrichtungen ist, dass die Einstellbarkeit bzw. die Ausrichtung der Tragfläche solcher Funktionseinheiten entweder nur mit großem technischem Aufwand und damit kostenintensiv oder nicht präzise genug und/oder nur eingeschränkt vornehmbar ist, Insbesondere die Verstellung der Kippachse z.B. bis zur Vertikalstellung der Funktionseinheit.

Nachteilig bei den bekannten Vorrichtungen ist, dass die Einstellbarkeit bzw. die 2-achsiale Ausrichtung der Tragfläche solcher Funktionseinheiten mit mindestens 2 Antrieben erfolgt.

Nachteilig bei den bekannten Vorrichtungen ist, dass die Einstellbarkeit der Neigung der Tragfläche solcher Funktionseinheiten in der Regel mit leistungsstarken Antrieben erfolgen muss, um Gewichts- und Windlasten bei Verstellung zu überwinden.

Nachteilig bei den bekannten Vorrichtungen Ist, dass die Einstellbarkeit der Neigung der Tragfläche solcher Funktionseinheiten in der Regel nicht wie bevorzugt von 0° bis 90° erfolgen kann, um Gewichts- und Windlasten durch Verstellung zu vermelden.

Nachteilig bei den bekannten Vorrichtungen ist, dass die Einstellbarkeit der Neigung der Tragfläche und die Ausrichtung der geneigten Tragfläche solcher Funktionseinheiten mit mehr als nur einem Antrieb erfolgen muss, um eine zweiachsiale Verstellung zu realisieren. Ferner sind der Eigenenergleverbrauch und/oder die Antriebsielstung durch Vertikalbewegungen von Massenschwerpunkten hoch.

Ferner genügen die entsprechenden bisher bekannten Vorrichtungen nicht den an diese gestellten, anwendungsbezogen mitunter hohen Anforderungen hinsichtlich einer Einstellbarkeit und/oder Einhaltung beziehungsweise Beibehaltung von präzisen Winkellagen, insbesondere bei wenigstens einen Antrieb zur Einstellung nutzenden Vorrichtungen.

Der Erfindung liegt in Anbetracht dieses Standes der Technik die Aufgabe zugrunde, eine Vorrichtung der eingangs genannten Art hinsichtlich der Einstellbarkeit bzw. der Ausrichtbarkeit der Tragfläche bzw. des Trägersystems zu verbessern und insbesondere mit einfachen und kostengünstigen Mitteln (insbesondere bzgl. Eigenenergieverbrauch) eine präzise 2-achsiale Einstellung zu ermöglichen, sowie die Stabilität und die Sicherheit gegenüber Wind- und Schneelasten zu gewährleisten.

Zur technischen Lösung wird mit der vorliegenden Erfindung eine Vorrichtung mit den Merkmalen des Anspruchs 1 vorgeschlagen. Weitere Details sind in den Unteransprüchen gekennzeichnet.

Erfindungsgemäß wird eine Vorrichtung zur 2-achsialen Nachführung bzw. Einstellbarkeit eines Trägersystems vorgeschlagen, welche gekennzeichnet ist, durch zwei an- oder aufeinander drehbar gelagerte, keilförmig ausgebildete, mit Drehlagern verbundene Elemente, mit jeweils unter einem spitzen Winkel zusammenlaufender Lagerfläche und Funktionsfläche, deren Lage zueinander durch relative Verdrehung einstellbar ist, wobei die Lagerflächen der keilförmigen Elemente einander zugewandt sind, die Funktionsflächen der keilförmigen Elemente voneinander abgewandt sind und durch relative Verdrehung der keilförmigen Elemente gegeneinander die Lage der Funktionsflächen der keilförmigen Elemente zueinander einstellbar ist, wobei eine der Funktionsflächen vorzugsweise drehbar an oder auf dem Untergrund/Basis oder auf einer Unterstützungsvorrichtung ist und die andere Funktionsfläche als Tragfläche oder als Auflager oder als Befestigungsvorrichtung ausbildet für die jeweilige Funktionseinheit oder Funktionsgruppe wie beispielsweise Photovoltaikmodule.

Durch die erfindungsgemäßen an- oder aufeinander drehbar gelagerten, keilförmig ausgebildeten Elemente Ist eine Einsteilbarkeit der Lage der von den keilförmig ausgebildeten Elementen jeweils bereitgestellten Funktionsflächen zueinander durch einfache relative Verdrehung der keilförmigen Elemente gegeneinander und damit der Tragfläche zum Untergrund gegeben, Erfindungsgemäß wird dabei eine Drehwinkeländerung in eine Lageänderung, insbesondere Neigungsänderung, umgesetzt. Der Erfindung liegt die Erkenntnis zugrunde, dass durch erfindungsgemäße Verwendung von wenigstens zwei gemeinsamen die zwei Funktionsflächen bereitstellenden keilförmig ausgebildeten Elementen, keilförmig ausgebildete Elemente Im Sinne der vorliegenden Erfindung sind neben Keilen auch Keilstümpfe und/oder dergleichen eine schlefe Ebene bereitstellende Elemente, auf einfache und kostengünstige Art und Weise eine Einstellbarkeit der Lage der Funktionsflächen zueinander durch einfaches Verdrehen der an- oder aufeinander drehbar gelagerten keilförmig ausgebildeten Elemente erzielbar ist.

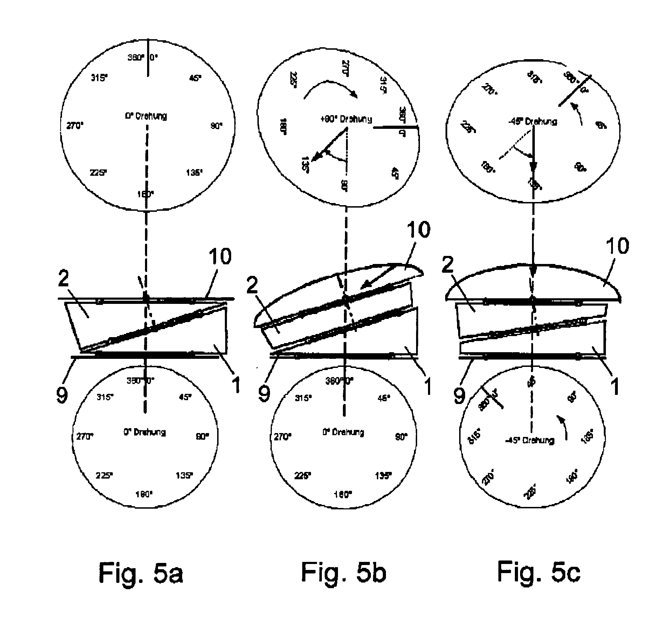

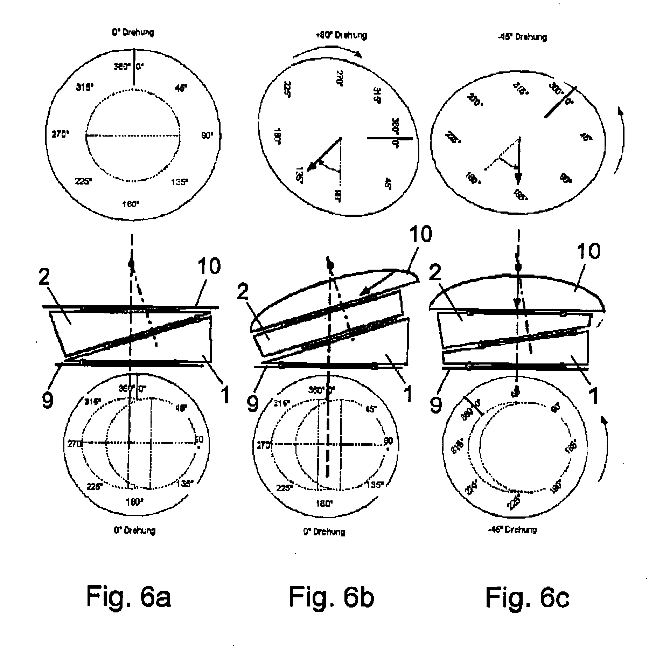

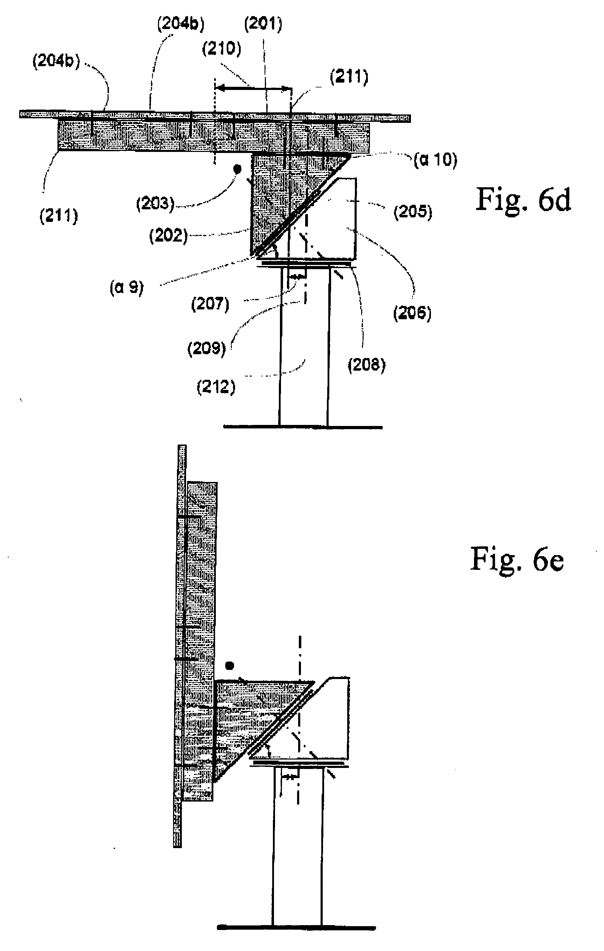

Gegenüber dem Stand der Technik realisiert die vorliegende Erfindung sowohl die dreidimensionale bzw. 2-achslale Ausrichtung von Funktionsflächen, vorzugsweise mit nur einem ortsfesten Antrieb, beispielsweise mit axialer Drehwinkelübertragung, als auch die frei einstellbare Lage des Ruhe- oder Drehpols der Funktionsflächen und der Tragfläche beziehungsweise eines Funktionselementes durch eine variable oder fest einstellbare Exzentrizität der Drehlagerachsen, vorzugsweise in den Lagerflächen (vergleiche beispielsweise L1 und L3 in Figur 5 und 6) derart, dass vorzugsweise gemäß Anspruch 1 der Massenschwerpunkt der gesamten oberen Funktionseinheit einschließlich Nutzlast in allen Einstellungspositionen quasi ruht.

Vorteilhafterweise werden 45° Kellelemente verwendet (s. Figuren, bzw. Keilelemente mit einer 90°-Winkelsumme der maßgeblichen für die Neigung der Funktionsfläche verantwortlichen spitzen Winkel, mit einer Exzentrizität der Drehlagerachse des oberen Keilelementes derart, die es erlaubt, die Funktionsfläche von beispielsweise senkrecht (90° gegenüber der gedachten horizontalen Grundfläche (z.B. Geländeoberfläche)) bis horizontal ausrichten zu können). Dies ermöglicht, das Schadenspotential durch Schneelasten (Vertikallasten) und insbesondere Windlasten (Horizontallasten) wirksam zu vermindern bzw. Schäden daraus zu vermeiden, z.B. durch Horlzontalstellung bei Sturm.

Vorteilhafterweise wird die Verbindung der Funktionsfläche auf dem oberen Keilelement derart vorgenommen, dass die Drehachse des oberen Keilelementes

etwa durch den Masseschwerpunkt der gesamten oberen Funktionseinheit einschließlich Nutzlast verläuft.

Vorteilhafterweise Ist durch relative Verdrehung der kellförmigen Elemente gegeneinander der Winkel zwischen den Funktionsflächen der keilförmigen Elemente einstellbar. Eine erfindungsgemäße Ausgestaltung der Vorrichtung ermöglicht vorteilhafterweise eine stufenlose und präzise Einstellung von Dreh- oder Kippwinkeln, insbesondere bei Ausgestaltung als mechanisch beziehungsweise elektrisch zu bedienendem Nachführsystem.

In einer weiteren vorteilhaften Ausgestaltung der Erfindung weist die der von der zusammenlaufenden Lagerfläche und Funktionsfläche gebildeten Spitze gegenüberllegende Fläche eines keilförmigen Elementes einen Winkel von etwa 90° zu der Lagerfläche oder der Funktionsfläche des keilförmigen Elementes auf.
Die Verwendung von keilförmigen Elementen mit einem Winkel von etwa 90° seitens der der bei Zusammenlaufen der Lagerfläche und Funktionsfläche gebildeten Spitze gegenüberliegenden Fläche ist insbesondere hinsichtlich der Fertigung der keilförmigen Elemente einer erfindungsgemäßen Vorrichtung vorteilhaft, da so entsprechende keilförmige Elemente durch entsprechendes diagonales Trennen oder Ablängen eines Profilkörpers, vorzugsweise eines Profilkörpers mit rundem oder rechteckigem Querschnitt herstellbar sind. Je nach gewünschter Anwendung und Ausgestaltung besteht ein entsprechender Profilkörper und damit ein entsprechendes keilförmiges Element aus Metall, Kunststoff oder dergleichen geeignetes Material. Eine weitere vorteilhafte Ausgestaltung der Erfindung Ist gekennzeichnet durch wenigstens ein aus einem kellförmigen Element mit einem Winkel von etwa 90° zu der Lagerfläche und einem keilförmigen Element mit einem Winkel von etwa 90° zu der Funktionsfläche bestehenden Paar keilförmiger Elemente. Entsprechende Paare keilförmiger Elemente können dabei keilförmige Elemente unterschiedlicher Winkel - sogenannte Keilwinkel - aufweisen, Bevorzugt sind Ausgestaltungen mit paarweise gleichem Kellwinkel. Ein entsprechendes Paar keilförmiger Elemente ist so vorteilhafterweise aus einem entsprechend geformten Zylinder oder aus Konstruktionsprofilen, vorzugsweise mit rundem oder rechteckigem Querschnitt, fertigbar. Eine weitere besonders bevorzugte Ausgestaltung der Erfindung sieht vor, dass wenigstens zwei Paare keilförmiger Elemente an- oder aufeinander drehbar gelagert sind, wobei die einander zugewandten Funktionsflächen der beiden Paare keilförmiger Elemente als Lagerfläche dienen. Entsprechende Paare keilförmiger Elemente ermöglichen so die Ausgestaltung erfindungsgemäßer Vorrichtungen mit hinsichtlich der Einstellmöglichkeiten vergrößertem Funktionsumfang.

Die Wahl der spitzen Winkel (Keilwinkel) α1 bis α10 ist beliebig und kann auch paarweise unterschiedlich gewählt werden, beispielsweise 25° für den unteren Keilwinkel α9 des unteren Keilelementes (206) und beispielsweise 65° für den oberen Keilwinkel α10 des oberen Keilelementes (202). Eine bevorzuge Ausgestaltung der Erfindung sieht vor, dass der Winkel zwischen der Lagerfläche und der Funktionsfläche eines keilförmigen Elementes etwa 45° beträgt. Die Verwendung von keilförmigen Elementen mit einem Winkel von etwa 45° zwischen der Lagerfläche und der Funktionsfläche eines keilförmigen Elementes erlaubt vorteilhafterweise eine Lageveränderung der Funktionsflächen zueinander über eine Verdrehung der keilförmigen Elemente gegeneinander in definierten Gradlagen. Bei Verwendung von zwei keilförmigen Elementen mit einem Winkel (Keilwinkel) von jeweils etwa 9°, entsprechend einem Summenwinkel von etwa 18°, zwischen der Lagerfläche und der Funktionsfläche ist durch eine relative Verdrehung der keilförmigen Elemente gegeneinander von 90° eine Neigungswinkelveränderung zwischen den Funktionsflächen von etwa 9° einstellbar.

Vorteilhafterweise gilt folgende mathematische Formel zur Berechnung und Steuerung der Neigung der Funktionsfläche:
sin(Neigungswinkel) = (1-cos(Drehwinkei)) ***** sin(Keilwinkel) * cos(Keilwinkel)).

Entsprechend Ist dies bei Verwendung von zwei keilförmigen Elementen mit einem Winkel von jeweils etwa 45° zwischen der Lagerfläche und der Funktionsfläche. Bei einer relativen Verdrehung der keilförmigen Elemente gegeneinander von etwa 90° eine Lage beziehungsweise Winkeländerung der Funktionsflächen der Vorrichtung zueinander von etwa 30° einstellbar.

Eine weitere vorteilhafte Ausgestaltung der Erfindung sieht vor, dass die keilförmigen Elemente stufenlos gegeneinander verdrehbar sind. Die stufenlose Verdrehbarkeit der keilförmigen Elemente gegeneinander ermöglicht vorteilhafterweise eine umfassende Einstellbarkeit der Lage der Funktionsflächen zueinander und damit die Einstellung der Tragfläche zum Untergrund beziehungsweise auf den Zielhorizont der Funktionseinheit.

Eine weitere bevorzugte Ausgestaltung der Erfindung sieht vor, dass die keilförmigen Elemente stufenweise um definierte Winkel gegeneinander verdrehbar sind, vorzugsweise um Winkel von 1° bis 15°, besonders bevorzugt um Winkelstufen von 2° oder einem Vielfachen von 2° oder stufenlos derart, dass die resultierende Neigung der Funktionsfläche eine ganzzahlige Gradzahl ergibt. Durch eine stufenweise Einstellbarkeit der keilförmigen Elemente ist vorteilhafterweise eine vereinfachte Bedienung beziehungsweise Steuerung der erfindungsgemäßen Vorrichtung erzielbar, insbesondere hinsichtlich der Einstellbarkeit von definierten Winkellagen der Funktionsflächen und damit der Tragfläche zum Untergrund oder der beispielsweise horizontalen Geländeoberfläche der erfindungsgemäßen Vorrichtung zueinander.

Eine weitere vorteilhafte Ausgestaltung der Erfindung Ist gekennzeichnet durch wenigstens ein Maß für die Lage der Funktionsflächen der keilförmigen Elemente und damit der Tragfläche zum Untergrund zueinander, vorzugsweise den Winkel zwischen den Funktionsflächen der keilförmigen Elemente, und/oder der Verdrehung der keilförmigen Elemente gegeneinander erfassendes und/oder wiedergebendes Mittel. Das Erfassen und Wiedergeben der Lage der Funktionsflächen der keilförmigen Elemente und/oder der Verdrehung der keilförmigen Elemente gegeneinander ermöglicht vorteilhafterweise eine vereinfachte Bedienung oder Steuerung der erfindungsgemäßen Vorrichtung hinsichtlich der Einstellbarkeit der Lage der Funktionsflächen. Eine vorteilhafte Ausgestaltung der Erfindung sieht vor, dass das Maß für die Lage der Funktionsflächen der keilförmigen Elemente zueinander und/oder der Verdrehung der keilförmigen Elemente gegeneinander mechanisch und/oder elektronisch erfassbar und/oder wiedergebbar ist. Vorteilhafterweise umfasst das Mittel eine skalierte Anzeige, besonders bevorzugt seitens der der Spitze der zusammenlaufenden Lagerfläche und Funktionsfläche gegenüberliegende Fläche wenigstens eines der keilförmigen Elemente. Durch entsprechende Verbindung und Anordnung einer Anzeige zur Wiedergabe der Lage der Funktionsflächen der keilförmigen Elemente zueinander und/oder der Verdrehung der keilförmigen Elemente gegeneinander wird die Bedienung oder Steuerung der erfindungsgemäßen Vorrichtung weiter vereinfacht, insbesondere da die entsprechende Lageinformation von einem Benutzer einfach von der Vorrichtung abgelesen werden kann, insbesondere zum beziehungsweise beim Einstellen der Lage der Funktionsflächen zueinander,

Vorteilhafterweise Ist wenigstens ein Drehlager zwischen den keilförmigen Elementen und/oder dem keilförmigen Element und der Basis und/oder keilförmigen Elementen und der Tragfläche beziehungsweise einem Funktionselement in einer und/oder In beiden Drehrichtungen festlegbar oder gleichbedeutend unabhängig von den anderen keilförmigen Elementen drehbar. Entsprechende zwischen beziehungsweise seitens der Lagerflächen der keilförmigen Elemente angeordnete Lager sind vorteilhafterweise als Wälz- und/oder Gleitlager ausgebildet. Zur Festlegung beziehungsweise Sperrung einer und/oder bei der Drehrichtungen wenigstens eines der keilförmigen Elemente werden vorteilhafterweise Bremsen oder Feststellvorrichtungen verwendet. Eine weitere vorteilhafte Ausgestaltung der Lager der erfindungsgemäßen Vorrichtung sieht die Verwendung von Rutsch- und/oder Magnetkupplungen oder Freiläufen beziehungsweise Rücklaufsperren vor.

Gemäß einer weiteren vorteilhaften Ausgestaltung der Erfindung weist die erfindungsgemäße Vorrichtung wenigstens und vorteilhafterweise nur einen Antrieb zum Drehen wenigstens eines keilförmigen Elementes und vorteilhafterweise zweler Keilelemente um die Drehlager auf, vorzugsweise einen elektrischen, pneumatischen und/oder hydraulischen Antrieb. Darüber hinaus kann der Antrieb auch ein manuell betätigter Antrieb, beispielsweise eine Handkurbel sein, oder direkt von Hand erfolgen. Vorteilhafterweise umfasst der Antrieb ein ein- und/oder mehrstufiges Getriebe zur Unter- und/oder Übersetzung von Drehbewegungen auf das wenigstens eine keilförmige Element. Bei entsprechender Verwendung von Feststellvorrichtungen, Freiläufen und/oder Rücklaufsperren sind vorteilhafterweise wenigstens zwei der keilförmigen Elemente von beziehungsweise mit einem Antrieb einzeln und/oder in Kombination antreibbbar. Eine weitere besonders bevorzugte Ausgestaltung der Erfindung sieht vor, dass die Verdrehung der keilförmigen Elemente gegeneinander steuerbar ist, vorzugsweise mittels des wenigstens einen Antriebs zum Drehen wenigstens eines keilförmigen Elementes um sein Drehlager. Die Steuerbarkeit der Verdrehung der keilförmigen Elemente gegeneinander umfasst eine Steuerung, die sämtliche Mess-, Regel- und/oder steuerungstechnischen Einrichtungen umfasst, um aus einer Verdrehung der keilförmigen Elemente eine Lageveränderung der Funktionsflächen zu bewegen. Im Rahmen der Steuerung werden entsprechende Drehbewegungen und Lageveränderungen erfasst, gesteuert und/oder geregelt.

Eine weitere Ausgestaltung der Erfindung sieht vor, dass die Funktionsfläche eines der keilförmigen Elemente an oder auf einer Basis, vorzugsweise einer Basisfläche, angeordnet Ist. Vorteilhafterweise Ist dabei die Funktionsfläche drehbar an oder auf der Basis gelagert. Je nach Anwendungsfall kann die Basis für das keilförmige Element einer erfindungsgemäßen Vorrichtung dabei durch den Erdboden, einem auf dem Erdboden angeordneten Gestell und/oder von einer seitens einer Vorrichtung bereitgestellten Basisfläche bereitgestellt werden. Die Basisfläche kann dabei Insbesondere durch eine parallel zur Erdoberfläche beziehungsweise dem Erdboden verlaufende Bezugsfläche gebildet sein. Dabei kann die von einer Vorrichtung bereitgestellte Basisfläche vorteilhafterweise einen bei Bedarf auch verstellbaren Winkel zur Bezugsfläche, also dem Erdboden, der Erdoberfläche oder dergleichen Fläche, einnehmend ausgebildet sein. Eine entsprechende von einer Vorrichtung bereitgestellte Basis beziehungsweise Basisfläche kann vorteilhafterweise von einem Drehantrieb, bereitgestellt sein.

Eine weitere vorteilhafte Ausgestaltung der Erfindung sieht vor, dass die Funktionsfläche des freien keilförmigen Elementes ein Auflager, vorzugsweise für eine darauf drehbar gelagerte Tragfläche oder ein darauf drehbares Funktionselement, bereitstellt. Die erfindungsgemäße Vorrichtung erlaubt so durch Verdrehen der keilförmigen Elemente gegeneinander ein Ausrichten der Lage der Tragfläche bezogen zu der Basis beziehungsweise Basisfläche.

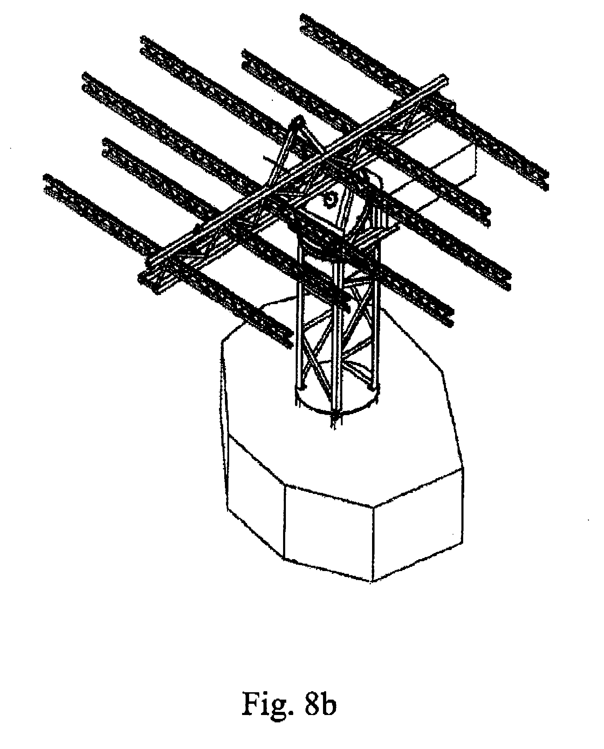

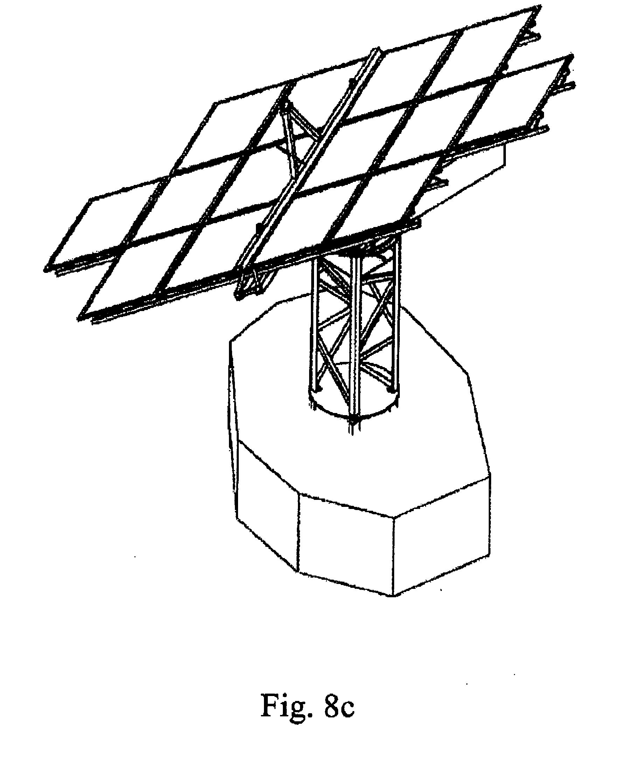

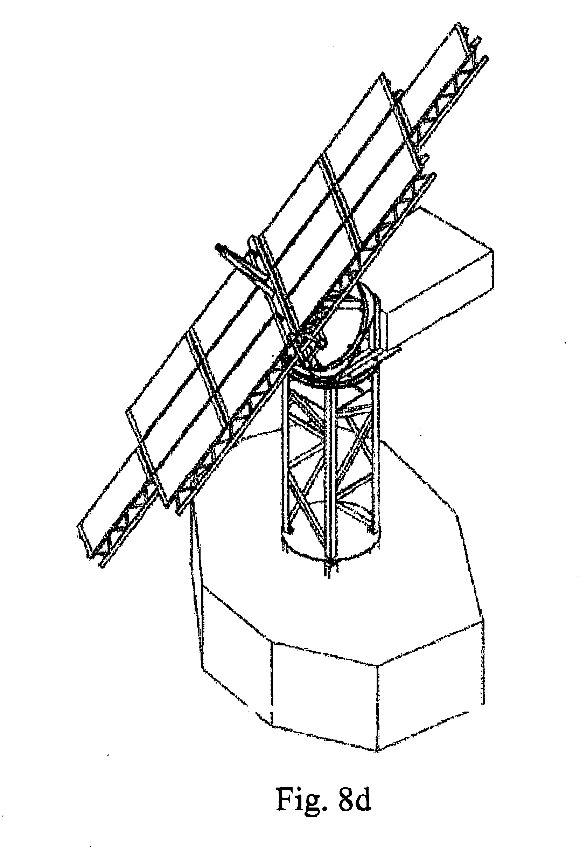

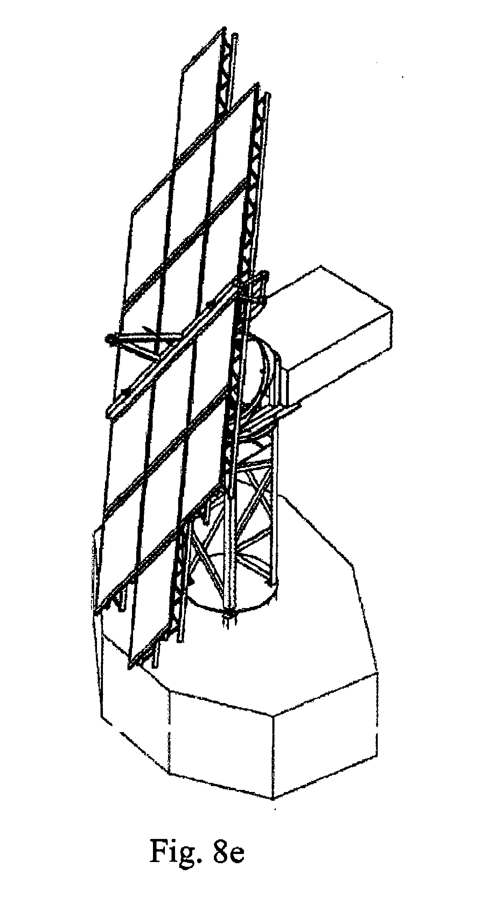

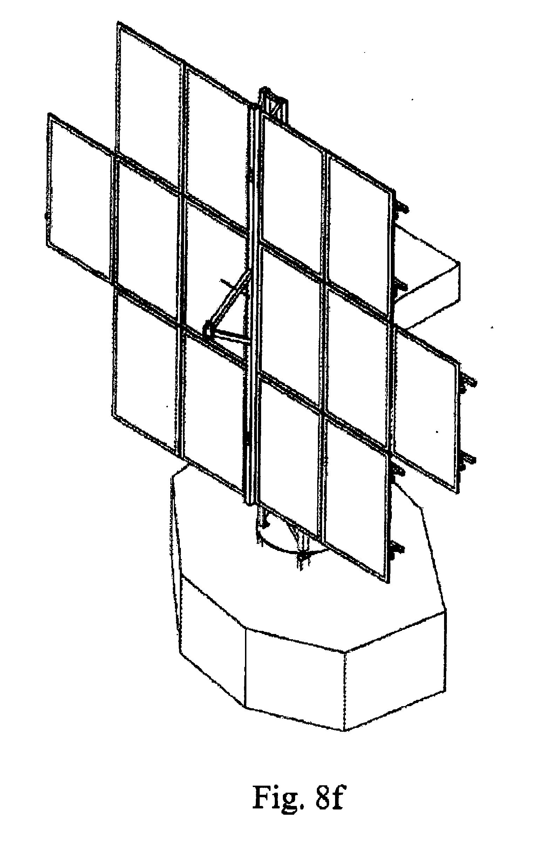

Eine bevorzugte Ausgestaltung der Erfindung sieht vor, dass die erfindungsgemäße Vorrichtung als Verbindungs- und/oder Konstruktionselement, vorzugsweise für Platten- und/oder Profilelemente, ausgebildet ist, wozu die freien Enden der Funktionsflächen an und/oder in zu verbindenden Elementen befestigbare, vorzugsweise lösbar befestigbare, Befestigungsmittel aufweisen. Eine entsprechend als Verbindungs- und/oder Konstruktionselement ausgebildete Vorrichtung Ist vorteilhafterweise als ein System aus 2-Punkt und/oder 3-Punkt und/oder 4-Punkt Gittertraversen ausgeführt, wie sie Im Mastbau (Glttermast), oder Bühnenbau verwendet werden (s. Fig. 8b), flexibel für die Anordnung von beispielsweise plattenförmigen Elementen (Photovoltaik-Modulen) in bestimmten Abständen zueinander oder dergleichen Profilelemente verwendbar.

Eine weitere vorteilhafte Ausgestaltung der Erfindung sieht die Nutzung der erfindungsgemäßen Vorrichtung als Präsentationsvorrichtung für zu präsentlerende Gegenstände oder Werbe- oder elektronische Präsentationselemente vor, beispielsweise als Vorrichtung zur Ausrichtung von Bildschirmen oder dergleichen.

Weitere Einzelheiten, Merkmale und Vorteile der Erfindung werden nachfolgend anhand der in den Figuren der Zeichnung dargestellten Ausführungsbeisplele der Erfindung näher erläutert. Dabei zeigen:
- Fig. 1 a und b: in einer schematischen Seitenansicht ein prinzipielles Ausführungsbeispiel einer erfindungsgemäßen Vorrichtung und deren Einstellbarkeitsbereiche hinsichtlich der Lagen der Tragfläche;
- Fig. 2a und b: In einer schematischen Seitenansicht ein weiteres prinzipielles Ausführungsbeispiel einer erfindungsgemäßen Vorrichtung und deren Einstellbarkeitsbereiche hinsichtlich der Lagen der Tragfläche;
- Fig. 3a und b: in einer schematischen Seitenansicht ein weiteres prinzipielles Ausführungsbeispiel einer erfindungsgemäßen Vorrichtung und deren Einstellbarkeitsbereiche hinsichtlich der Lagen der Tragfläche;
- Fig. 4a bis f: in einer schematischen Prinzipdarstellung die Verdrehung der keilförmigen Elemente einer erfindungsgemäßen Vorrichtung nach Fig. 1 innerhalb deren Einstellbarkeitsbereiche nach Fig. 1 a und Fig. 1b;
- Fig. 5a bis c: in einer schematischen, teilweise perspektivischen Prinzipdarstellung die Verdrehung der keilförmigen Elemente einer weiteren Ausführungsform einer erfindungsgemäßen Vorrichtung;
- Fig. 6a bis c: in einer schematischen, teilweise perspektivischen Prinzipdarstellung die Verdrehung der keilförmigen Elemente einer weiteren Ausführungsform einer erfindungsgemäßen Vorrichtung;
- Fig. 6d bis e: In einer schematischen Prinzipdarstellung die Gegenüberstellung Relativverdrehung 0° und 180° der keilförmigen Elemente entsprechend der Ausgangsposition 0° Grad Schräglage und 90° Schräglage in der Ausführungsform einer erfindungsgemäßen Vorrichtung, in der die wirksamen Keilwinkel α9 und α10 vorzugsweise je 45° sind;
- Fig. 7a und b: in einer schematischen Seitenansicht eine weitere prinzipielle Ausführungsform einer erfindungsgemäßen Vorrichtung und deren Einstellbarkeit hinsichtlich der Lagen der Tragfläche;
- Fig. 7c: in einer schematischen Detaildarstellung das Links- Rechtslauf Blockierprinzip einer erfindungsgemäßen Vorrichtung;
- Fig. 7d: in einer schematischen Seitenansicht eine weitere prinzipielle Ausführungsform einer erfindungsgemäßen Vorrichtung und deren Einstellbarkeit hinsichtlich der Antriebsausführung und
- Fig. 8a bis h: in einer schematischen, perspektivischen Prinzipdarstellung die Relativverdrehung von 0° , 40°, 80°, 120° und 180° der keilförmigen Elemente einer Ausführungsform einer erfindungsgemäßen Vorrichtung.

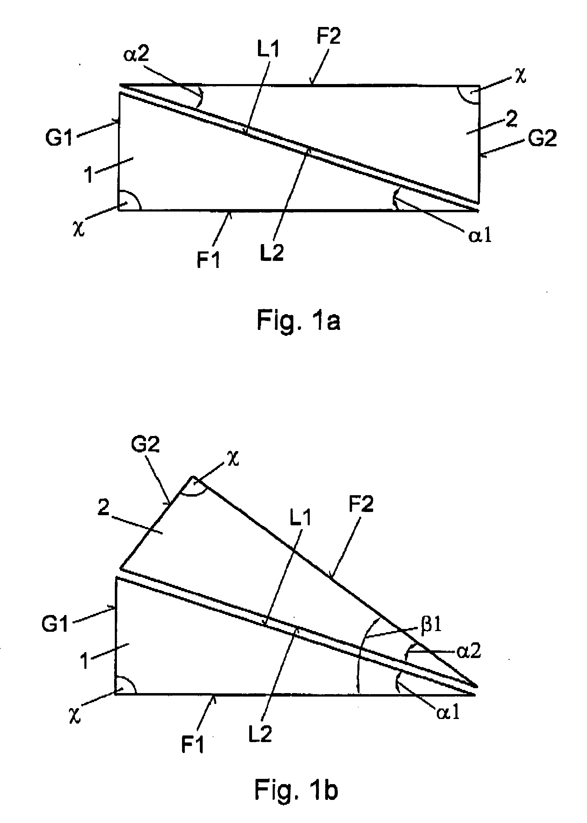

Die Fig. 1a und 1b zeigen In einer schematischen Seitenansicht eine Vorrichtung zur Bereitstellung von zwei Funktionsflächen F1 und F2, deren Lage zueinander durch Verdrehung gegeneinander einstellbar Ist. Die Funktionsfläche F1 Ist dabei auf dem Untergrund angeordnet und die Funktionsfläche F2 bildet die Tragfläche beziehungsweise ein Auflager für die Tragfläche. Die Vorrichtung weist vorliegend zwei als keilförmige Elemente 1 und 2 dienende Keilelemente 1 und 2 auf, deren Lagerfläche L1 beziehungsweise L2 und Funktionsfläche F1 beziehungsweise F2 jeweils unter einem spitzen Winkel α1 beziehungsweise α2, vorliegend etwa 18o, zusammenlaufen. Die keilförmigen Elemente 1 und 2 sind vorliegend als rechtwinklige Kellelemente 1 und 2 ausgebildet, wobei der Winkel zwischen der dem Winkel α1 beziehungsweise α2 gegenüberliegenden Seite beziehungsweise Seitenfläche G1 beziehungsweise G2 und der jewelligen Funktionsfläche F1 beziehungsweise F2, vorliegend der Winkel γ, 90° beträgt. Die Keilelemente 1 und 2 sind mit ihren Lagerflächen In L1 und L2 aufeinander drehbar gelagert, wobei sich die Lagerflächen L1 und L2 der Keilelemente 1 und 2 einander zugewandt sind. Dementsprechend sind die Funktionsflächen F1 und F2 der Kellelemente 1 und 2 voneinander abgewandt. Durch relative Verdrehung der Keilelemente 1 und 2 gegeneinander, beispielsweise durch Verdrehen des Keilelementes 2 gegenüber dem Keilelement 1 ist die Lage der Funktionsfläche F1 und F2 der Keilelemente 1 und 2 zueinander und damit die Lage und Position der Tragfläche zum Untergrund einstellbar. Dabei ist der Winkel zwischen der Funktionsfläche F1 des Keilelementes 1 und der Funktionsfläche F2 des Keilelementes F2, vorliegend der Winkel β1 einstellbar. Bei der in Fig. 1a dargestellten Lageanordnung der beiden Kellelemente 1 und 2 zueinander verlaufen die Funktionsflächen F1 und F2 der Keilelemente 1 und 2 parallel zueinander. Durch Verdrehen des Keilelementes 2 gegenüber dem Keilelement 1 Ist die Funktionsfläche F2 um den Winkel β1 gegenüber der Funktionsfläche F1 neigbar. In Fig. 1b ist das Kellelement 2 gegenüber dem Keilelement 1 um 180° verdreht und dementsprechend der Winkel β1 zwischen der Funktionsfläche F1 des Keilelementes 1 und der Funktionsfläche F2 des Keilelementes 2 eingenommen.

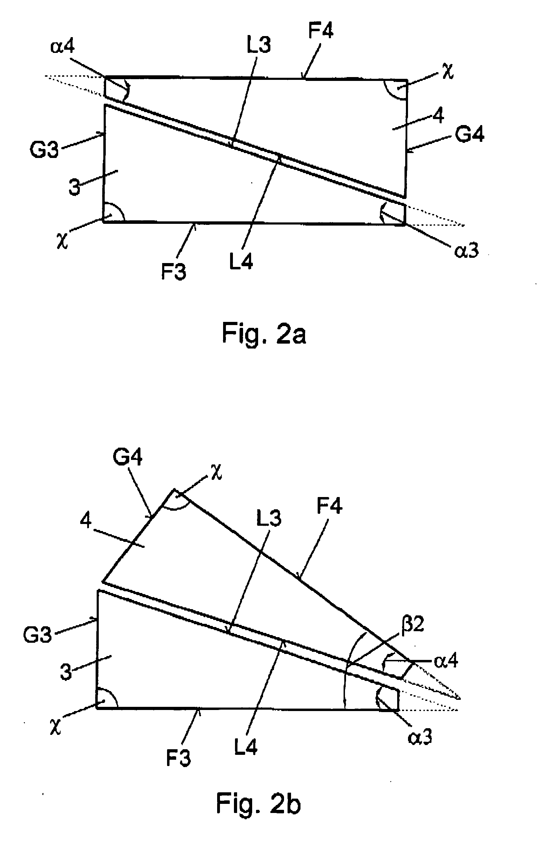

In Fig. 2a und 2b ist eine weitere Ausführungsform einer Vorrichtung zur Bereitstellung von Funktionsflächen F3 und F4, deren Lage zueinander einstellbar ist, dargestellt. Die Funktionsfläche F3 ist dabei auf dem Untergrund angeordnet und die Funktionsfläche F4 bildet die Tragfläche beziehungsweise ein Auflager für die Tragfläche. Die keilförmigen Elemente 3 und 4 sind vorliegend als Keilstümpfe 3 und 4 ausgebildet, wobei zwischen den Lagerflächen L3 beziehungsweise L4 und den Funktionsflächen F3 beziehungsweise F4 der Keilstümpfe 3 und 4 jeweils der Winkel α3 beziehungsweise α4, vorliegend etwa 18°, gegeben Ist. Durch entsprechende Verdrehung des Kellstumpfes 4 gegenüber dem Kellstumpf 3 ist die Lage der Funktionsfläche F4 des Keilstumpfes 4 gegenüber der Funktionsfläche F3 des Keilstumpfes 3 vorliegend veränderbar. Die Änderung der Lage der Funktionsfläche F4 gegenüber der Funktionsfläche F3 erfolgt dabei durch eine Veränderung des Winkels zwischen der Funktionsfläche F3 und der Funktionsfläche F4, vorilegend dem Winkel β2 in Fig. 2b.

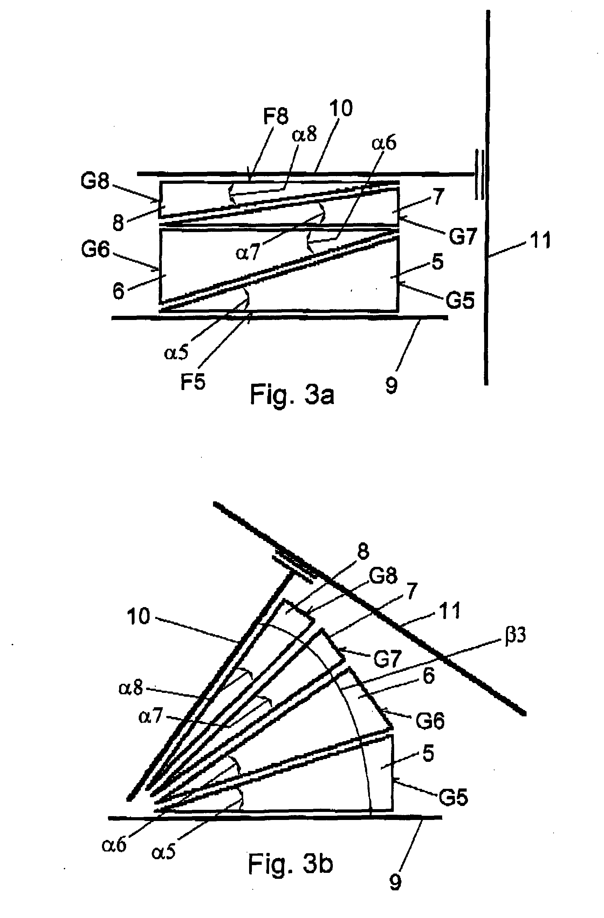

Bei dem in Fig. 3a und 3b dargestellten Ausführungsbeispiel einer Vorrichtung zur Bereitstellung von zwei Funktionsflächen F5 und F8 sind vier keilförmige Elemente in Form von Keilen 5, 6, 7 und 8, welche drehbar aufeinander angeordnet sind, verwendet. Die Funktionsfläche F5 Ist dabei auf dem Untergrund 9 angeordnet und die Funktionsfläche F8 bildet ein Auflager für die Tragfläche 10. Die Keile 5 und 6 sind vorliegend mit einem Winkel α5 und α6 von etwa 18° ausgebildet, während die Kelle 7 und 8 ein Winkel α7 beziehungsweise α8 von etwa 9o aufweisen. Die Funktionsfläche F5 des Keiles 5 ist vorliegend auf dem Boden oder einer Basisfläche 9 drehbar gelagert. Die Funktionsfläche F8 des Keiles 8 dient vorliegend als Auflager für eine an einem Lager 11 gelagerte Tragfläche 10. Durch Verdrehung der Keile 6 und 8 gegenüber den Keilen 5 beziehungsweise 7 ist die Vorrichtung von der in Fig. 3a dargestellten in die In Fig. 3b dargestellte Lage verbringbar, wobei zwischen den Funktionsflächen F5 des Kelles 8 und der Funktionsfläche F8 des Keiles 8 der Winkel β3 eingenommen wird.

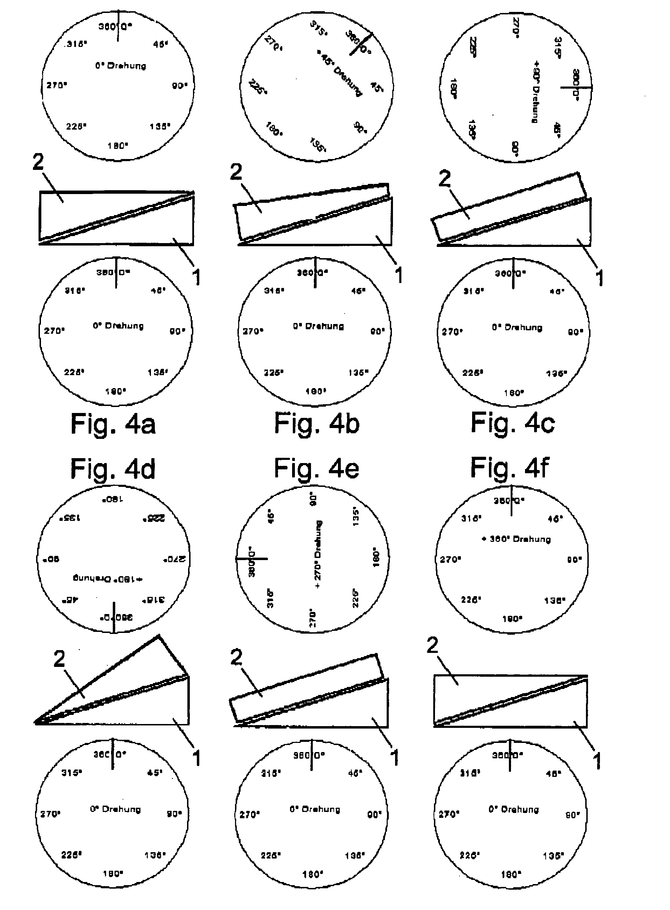

In den Fig. 4a bis 4f ist in einer schematischen Darstellung die schrittweise Verdrehung des Keilelementes 2 gegenüber dem Keilelement 1 dargestellt. Die oberhalb des Keilelementes 2 dargestellte Gradanzeige zeigt die schrittweise Verdrehung des Keilelementes 2 an. Die unterhalb des Keilelementes 1 angegebene Gradanzelge zeigt die Verdrehung des Keilelementes 1 an.

Vorliegend wird das des Kellelementes 1 dabei nicht verdreht. Vorilegend erfolgt eine Verdrehung des Kellelementes 2 ausgehend von der in Fig. 4a dargestellten Position um 360° In die in Fig. 4f dargestellte Position, entsprechend einer Volldrehung des Keilelementes 2. In den einzelnen Schritten von Fig. 4a nach Fig. 4b, von Fig. 4b nach Fig. 4c, von Fig. 4c nach Fig. 4d, von 4d nach Fig. 4e und von Fig. 4e nach Fig. 4f wird das Keilelement 2 dabei jeweils um 45° Im Uhrzeigersinn gegenüber dem des Keilelements 1 verdreht.

In den Fig. 5a bis 5c ist in einer schematischen, teilweise perspektivischen Prinzipdarstellung (Fig. 5b und 6c) die Verdrehung der keilförmigen Elemente 1 und 2 einer weiteren Ausführungsform einer erfindungsgemäßen Vorrichtung dargestellt. Die Fig. 5a bis 5c zeigen dabei die Verdrehung des keilförmigen Elementes 2 gegenüber dem kellförmigen Element 1 (von Fig. 5a nach Fig. 5b), mit anschließender Verdrehung (von Fig. 5b nach Fig. 5c) beider keilförmigen Elemente 1 und 2 gemeinsam gegenüber der Basis 9.

Die Vorrichtung nach den Fig. 5a bis 5c weist zwischen der Basis 9 und der Funktionsfläche 1 des keilförmigen Elements 1, zwischen der Lagerfläche 1 des keilförmigen Elements 1 und der Lagerfläche 2 des keilförmigen Elements 2, zwischen der Funktionsfläche F2 des keilförmigen Elements 2 und der Tragfläche 10 jeweils Drehlager auf. Die Relativposition der Drehlager ist so gewählt, dass die Drehachse des Lagers zwischen der Basis 9 und der Funktionsfläche 1 des keilförmigen Elements 1, die Drehachse des Lagers zwischen der Lagerfläche 1 des keilförmigen Elements 1 und der Lagerfläche 2 des keilförmigen Elements 2 und die Drehachse des Lagers zwischen der Funktionsfläche F2 des keilförmigen Elements 2 und der Tragfläche 10 sich in diesem speziellen Fall etwa In einem Punkt (Pol, Drehpol) der Funktionsfläche schneiden.

Anhand der Fig. 5a bis 5c wird ersichtlich, wie sich die Falllinie (der auf der Tragfläche 10 eingezeichnete Pfeil) aus der Referenzposition bei Winkelgleichheit von α1 und α2 aus der Horizontallage zwischen 90° und 180° bei Verdrehung des keilförmigen Elements 2 gegenüber dem nicht verdrehten keilförmigen Element 1, bewegt. Bei absoluter als auch bei relativer Verdrehung um 180° des keilförmigen Elementes 2 gegenüber dem zunächst nicht verdrehten (blockierten) Element 1 "wandert" die Faillinie der Tragfläche (auf der Tragfläche 10 dargestellt durch einen eingezeichneten Pfell) in gleicher Drehrichtung im Mittel um die Hälfte der relativen Winkelverschiebung der Keilelemente (keilförmiges Element 2 gegenüber kellförmigem Element 1). Die Berechnung dieser Ausrichtungskorrektur (Falllinienenveränderung oder auch Azimutkorrekturwinkel) zur Steuerung der Funktionsfläche ist vorteilhafterweise durch eine Immer eindeutige trigonometrische Beziehung gekennzeichnet, in der die relative Winkelverschiebung der Keilelemente und die gewählten Keilwinkelgrößen variabel sind.

Die Berücksichtigung dieser Beziehung wird gegenüber dem Stand der Technik in den Erfindungsgedanken einbezogen, insbesondere durch die Anordnung einer auf dem Keilelement 2 unabhängig drehbar gelagerten Tragfläche 10 oder eines genutzten unabhängig drehbar gelagerten Funktionselementes, um bei dreidimensional veränderlicher Faillinle, die die Schräglage der Funktionsfläche charakterisiert, die Ausrichtungsstabilität und die Ausrichtungsunabhängigkeit der Tragfläche 10 um ihre Drehachse gewährieisten zu können. Soll eine Ausrichtung der Faillinie (der auf der Tragfläche 10 eingezeichnete Pfeil) bei gleich bleibendem Winkel β1 erfolgen, so ist die gemeinsame Verdrehung des keilförmigen Elements 1 und des keilförmigen Elements 2 erforderlich. Hier Im Beispiel bei kleinen Kellwinkeln von beispielsweise 9° (Fig. 5c) mit einer Rückdrehung um etwa 45° (jedoch präzise durch eine immer eindeutige trigonometrische Beziehung gekennzeichnet) nach erfolgter Relativverschiebung (Fig. 5b) von +90° des keilförmigen Elements 2 gegenüber dem des keilförmigen Elements 1.

Die Ausrichtung der 3-dimensional abhängig variablen Fallllnle (der auf der Tragfläche 10 eingezeichnete Pfeil) deren Betrag und Richtung von der Relativverschiebung des keilförmigen Elements 2 gegenüber dem keilförmigen Element 1 eindeutig geometrisch abhängig ist - ist dann erforderlich, wenn die Richtung der Faillinie (der auf der Tragfläche 10 eingezeichnete Pfeil) bestimmten Anforderungen entsprechen soll, wie zur Nachführung von Solaranlagen oder wie bei einem Golfübungsgerät, bei dem die Schräglage der Standfläche auf dem Funktionsträger gegenüber der Schlagrichtung des Golfballes ausgerichtet werden kann, z.B. in "Hanglage abwärts" oder "Hanglage aufwärts" oder "seitliche Hanglage aufwärts" oder "seitliche Hanglage aufwärts" oder Mischformen der genannten Hanglagen, beispielsweise bei einer Winkellehre, bei der die 3-dimensionale Vorrichtungeveränderung für eine 2-dimensionale Winkeidarstellung beziehungsweise eine Winkelprojektion auf einer Ebene (2-dimensional) erforderlich ist.

Die in den Fig. 5a bis 5c dargestellte Ausführungsform Ist besonders vorteilhaft nutzbar, insbesondere da der oben als Pol beziehungsweise Drehpol bezeichnete Punkt bei allen möglichen Bewegungen quasi ruht. Dieser Punkt kann Vorteilhafterweise insbesondere dazu genutzt werden, Vorrichtungen in diesem Punkt auf der Funktionsfläche zu befestigen, beispielsweise für fokussierende Geräte, oder Zielvorrichtungen.

Bei dem In den Fig. 6a bis 6c dargestellten Ausführungsform Ist die Anordnung der Lager so gewählt, dass der oben als Pol beziehungsweise Drehpol bezeichnete Punkt definitiv außerhalb und/oder oberhalb der Funktionsebene liegt. Dies ist Insbesondere bei den Anwendungen vorteilhaft, die einen ruhenden Punkt oberhalb der Funktionsebene benötigen, beispielsweise Geräte mit möglichst ruhendem "Brennpunkt" oder Orte für Ziele (Zielobjekte) die mit Laser anvisiert werden, die dann aus unterschiedlichen Richtungen durch Betätigung der Vorrichtung mit entsprechend montierter Einrichtung auf der Funktionsfläche, auf diesen Punkt (Pol, Drehpol) als Ziel, (Zielobjekt) zielen können. Anwendungen sind beispielsweise In der Medizintechnik oder der Energietechnik gegeben. Durch die vorteilhafterweise variabel wählbare Anordnung der Drehlager können je nach Anforderung in bestimmten Punkten der Vorrichtung Taumelbewegungen der Funktionsebene verhindert beziehungsweise definiert erzeugt und/oder durchgeführt werden.

Die in den Fig, 6d und 6e dargestellte Ausführungsform ist besonders vorteilhaft nutzbar, insbesondere da die Drehachse 201 des oberen Kellelements 202 annähernd durch den Masseschwerpunkt 203 der gesamten oberen Funktionseinheit 204 verläuft, bestehend aus oberem Keilelement 202, der Tragkonstruktion 204a und der Nutzlast 204b, die durch Verbindungselemente 211 verbunden sind.

Die in den Fig. 6d und 6e dargestellte Ausführungsform Ist besonders vorteilhaft nutzbar, insbesondere da der oben als Masseschwerpunkt beziehungsweise Drehpol zu bezeichnende Punkt 203 bei allen Bewegungen des oberen Keilelements 202 keine Vertikalverschiebung erfährt. Dies kann vorteilhafterweise insbesondere dazu genutzt werden, die Antriebsleistung des Motors zu minimieren und das Getriebe im Hinblick auf die Belastung aus Eigengewicht und Nutzlast zu minimieren.

Die besonders vorteilhafte Anordnung der oberen Funktionseinhelt 204 einschließlich Nutzlast 204b, beispielsweise Photovoltaikmodule, wird mit entsprechender Exzentrizität 210 erfolgen, damit die geometrische Anforderung, dass sich Masseschwerpunkt 203 und Drehachse 201 des oberen Keilelements 202 In einem Punkt treffen, mit der erfindungsgemäßen Ausführung der Vorrichtung gemäß Anspruch 1 erfüllt wird.

Die Anordnung des oberen Lagers 205 wird bei obiger Ausführung gemäß Anspruch 2 mit solcher Exzentrizität 207 auf der Keilebene angeordnet, dass Kollisionen mit dem unteren Keilelement 206 und der Basis 212 auch bei vorzugsweise 180° Relativdrehung des oberen Kellelementes 202 gegenüber dem unteren Kellelement 206 vermieden werden, dass die Funktionsebene 204 b neben der gewünschten Schräglagenerzeugung zusätzlich eine definierte taumelnde Bewegung ausführt ohne dass sich eine wesentliche Vertikalbewegung des Massenschwerpunktes 203 einstellt. Der Massenschwerpunkt bewegt sich vorzugsweise bei der erfindungsgemäßen Vorrichtung auf einer annähernd horizontalen Kreisbahn durch die gemeinsame Drehung der beiden Keilelemente 202 und 206 auf dem unteren Drehlager 208 um die Drehachse 209.

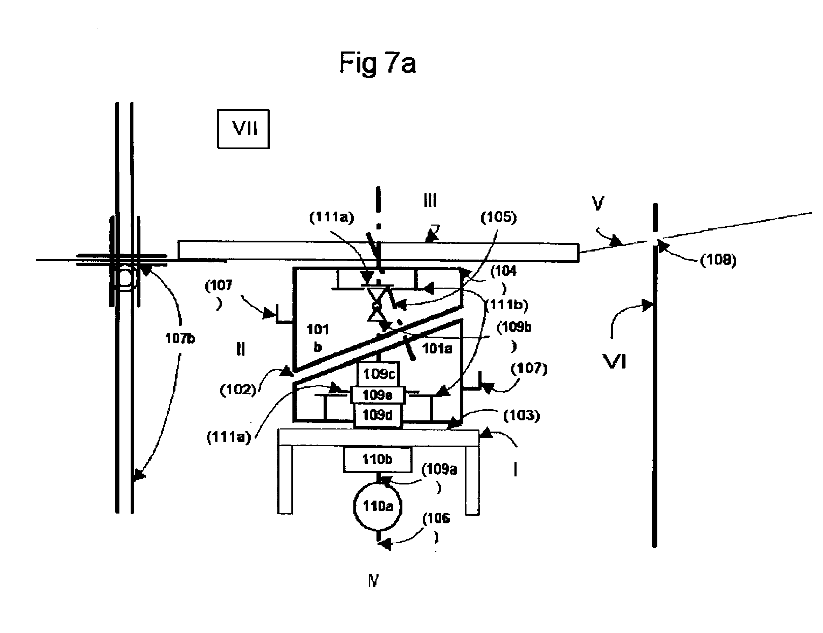

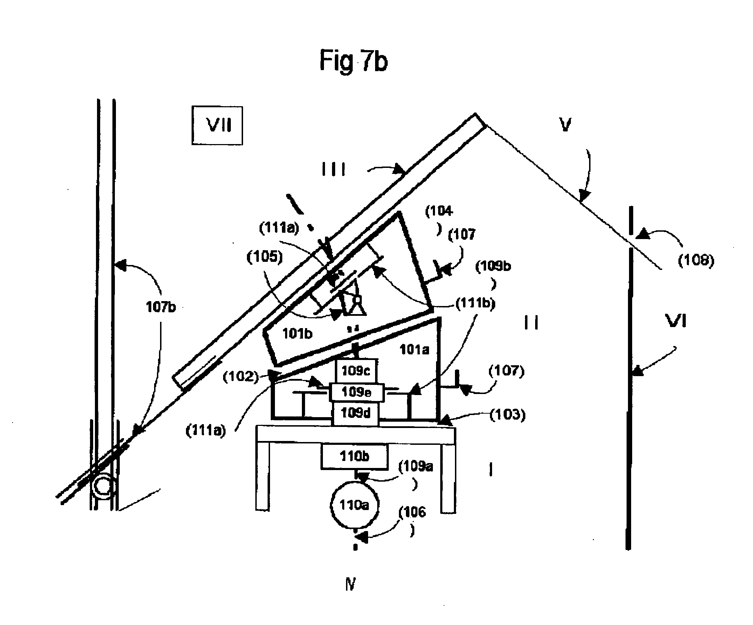

Die in den Fig. 7a bis 7d gezeigte Ausführung einer erfindungsgemäßen Vorrichtung weist eine mechanische Verstelleinhelt und konstruktive Ausführung (II) für mehrachsige Winkel- beziehungsweise Drehwinkelverschlebungen, -bewegungen und/oder -veränderungen mit mindestens zwei Winkelelementen, (keilförmige Elemente) oder keilförmige Konstruktionen (nachfolgend Winkelelemente, Keilelemente oder Keilscheiben genannt) 101a und 101b auf, die zueinander drehbar beziehungsweise verstellbar sind und/oder in der Winkelelement- beziehungsweise Keilelementverbindungsebene (Keilschelbenverbindungsebene) 102 gelagert oder geführt werden.

Die Kellschelben 101a und 101b weisen feste oder frei einstellbare Kellwinkel α 101a und α 101b auf. Die relative Drehwinkeländerung γ zwischen der Kellschelbe 101a und der Keilscheibe 101b erzeugt die Veränderung des Neigungswinkels β, das heißt der Neigungswinkel β ist eindeutig durch die relative Drehwinkeländerung γ und durch die Größe der Kellwinkel α101a und α101b quantifiziert.

Durch Veränderung (Drehung) der Drehwinkellage der Keilscheiben 101a und 101 b zueinander (Relativverschiebung) um ihre jewelligen Drehachsen erfährt die Drehachse der Funktionsträgerebene (104) (Funktionsebene) eine mehrachsige Winkelveränderung oder eine vorzugsweise stufenlose mehrachsige Veränderung Ihres Neigungswinkels, also des aus Neigungswinkel β über der Faillinie der Funktionsebene gegenüber der Basisebene I und deren Drehachse 106 gebildeten Raumwinkels.

Die von der Relativverschiebung γ der Kollschelben abhängige relative Drehwinkeländerung des Positionswinkels π der senkrecht auf der Funktionsebene 104 stehenden Falllinienebene kann durch die gemeinsame Drehwinkelveränderung der Kellscheibe 101a und Kellscheibe 101b in eine beliebige Zielrichtung verändert werden, vorzugsweise beispielsweise wie bei einer Winkellehre oder durch entsprechende Absolutdrehung der einzelnen Keilschelben 101a und 101b, welche die gewünschte Drehwinkellage des Positionswinkels π der Faillinie berücksichtigt.

Die Basis I weist eine geeignete Aufnahme und/oder Lagerung für das Keilelement 101a auf, so dass durch die Veränderung des Drehwinkels γ der Keilscheiben um die Drehachse 106 neben der Einstellung des Neigungswinkels β auch die Ausrichtung des Neigungswinkels β der Funktionsträgerebene 104 auf den gewünschten Positionswinkel π erreicht werden kann.

Die Veränderung der Drehwinkellage der Keilelemente zueinander kann manuell oder mit einem oder mehreren mechanischen Antrieben oder durch einen oder mehrere vorzugsweise nur ortsfeste elektrisch betriebene Antriebe erfolgen.

Durch geeignete Werkstoffe und die Ausführung der Keilelemente, sowie die Auswahl, Anordnung und das Zusammenspiel form- und kraftschlüssiger Maschinenelemente, wie Wälz- und/oder Gleitlager, Rutsch- oder Magnetkupplungen, Bremsen oder Feststellvorrichtungen sowie vorzugsweise Frolläufe und/oder Rücklaufsperren, wie sie Insbesondere für das Antriebssystem der Keilscheiben im Beispiel eingesetzt werden, kann eine stufenlose Veränderung des mehrachsigen Kippwinkels vorzugsweise mit nur einer einzigen Antriebseinheit erreicht werden.

Die Vorrichtung weist Bedienungsvorrichtungen beziehungsweise Verstellvorrichtungen 107 sowie 111a und 111b zur Übertragung und Veränderung der Drehwinkellage der Kellelemente auf, die es ermöglichen, von Hand oder mit Fremdenergie angetrieben, sowohl gezielt die Relativbewegungen der Keilelemente zueinander, insbesondere der Keilscheiben 101a und 101b, sowie deren gemelnsame Drehbewegung beziehungsweise Verstellung auszuführen.

Die Vorrichtung weist weiter ein Antriebssystem (IV) auf, welches mindestens eine Antriebseinheit 109 umfasst, mit der die manuell oder motorisch herbeigeführten mehrachsigen Winkel- beziehungsweise Drehwinkelverschiebungen und -bewegungen und/oder -veränderungen unterstützt beziehungsweise gezielt ausgeführt beziehungsweise verhindert werden können.

Die Antriebseinheit 109 weist vorzugsweise mindestens ein gelenkiges Wellenelement 109b auf, mit der die manuell oder motorisch herbeigeführte mehrachsigen Winkel- beziehungsweise Drehwinkelverschiebungen und -bewegungen und/oder -veränderungen der Keilscheibe 101b unterstützt beziehungsweise gezielt ausgeführt und/oder zugelassen beziehungsweise verhindert werden können. Das Wellenelement 109b ist dabei vorzugsweise als Doppeiwellengelenk oder als Gelenkwelle als gelenkiges Wellenelement ausgeführt.

Die Antriebseinheit 109 ist mit Vorrichtungen 111 versehen, die die Stellkräfte beziehungsweise das Drehmoment der Antriebseinheit 109 auf die Keilscheiben 101a und 101b übertragen.

Bei Handbetrieb können vorzugsweise durch Veränderung beziehungsweise Drehung der Keilscheibe 101 b mittels Betätigung der Bedienungsbeziehungsweise Verstellvorrichtungen 107 die Stellkräfte beziehungsweise das Drehmoment beziehungsweise der Drehwinkel γ beziehungsweise Positionswinkel π über die Vorrichtung 111 auf die Antriebseinheit 109 übertragen werden.

Die Vorrichtung 111 ist vorzugsweise als Speichenring 111a mit Speichen 111 b ausgeführt, die die Stellkräfte beziehungsweise das Drehmoment der Antriebseinheit 109 auf die Keilschelben 101a und 101b und von den Keilscheiben 101a und 101b auf die Antriebseinheit 109 übertragen.

Die Antriebseinheit 109 kann - wie vorliegend dargestellt zusätzlich mindestens einen motorischen Antrieb 110 aufweisen. Der motorische Antrieb 110 weist vorzugsweise einen ein- oder mehrstufigen Getriebemotor (Motor 110a mit Getriebe 110b auf. Der motorische Antrieb 110 weist vorzugsweise einen ein- oder mehrstufigen Schneckengetriebemotor auf, vorliegend einen Doppeischneckengetriebemotor 110a, 110b, um einerseits Geräuscharmut und andererseits ein hohes Untersetzungsverhältnis erzielen zu können.

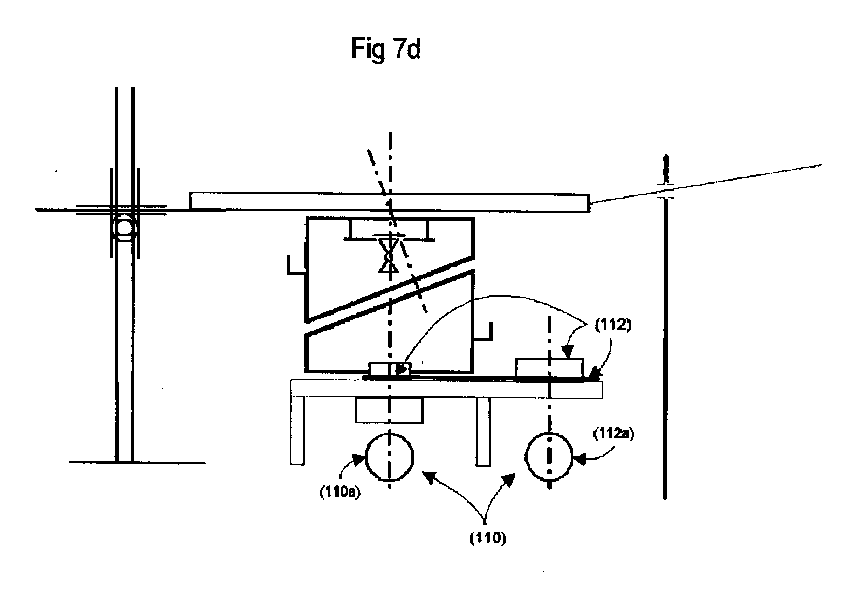

Der motorische Antrieb 110 kann alternativ gemäß Fig. 7d einen Motor oder einen ein- oder mehrstufigen Getriebemotor 110a, und zusätzlich eine Antriebsmotor 112a mit Untersetzungsstufe 112 aufweisen, die beispielsweise mit Kettenrad einschlleßlich Antriebskette oder mit Keil- oder Zahnriemenscheibe einschließlich Keil- beziehungsweise Zahnriemen ausgeführt sein kann.

Die Antriebseinheit 109 kann zusätzlich einen mechanischen Antrieb aufweisen, der quasi als Verlängerung der Antriebswelle 109a bei Bedarf mit zwischengeschaltetem Winkelgetriebe oder Wellengelenk, über die die manuell oder motorisch herbeigeführten mehrachsigen Winkel- beziehungsweise Drehwinkelverschiebungen und -bewegungen und/oder -veränderungen der Keilscheiben 101a und 101b unterstützt beziehungsweise gezielt ausgeführt oder verhindert werden können.

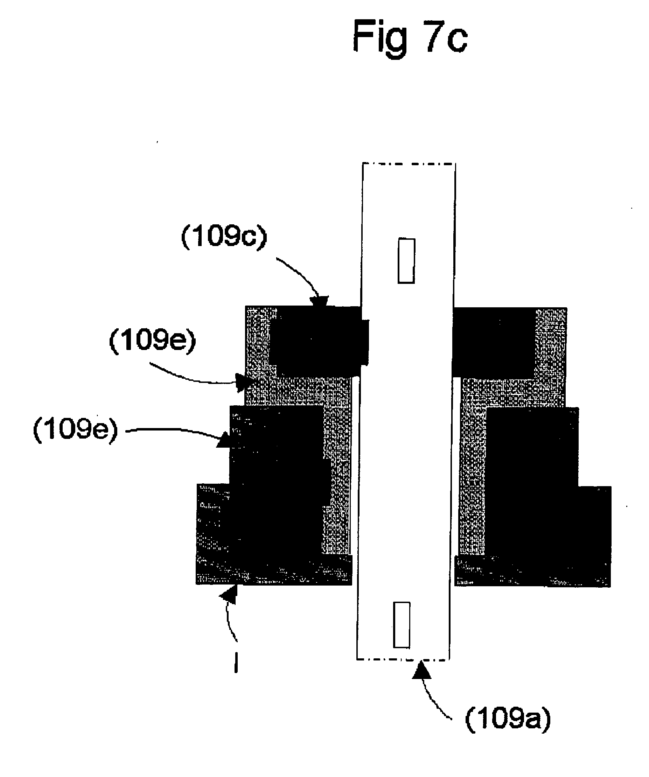

Die erfindungsgemäße Vorrichtung weist form- und/oder kraftschlüssig zusammenwirkende Elemente auf, mit denen die Jeweiligen Bewegungen der einzelnen Keilscheiben zueinander, als auch die Bewegung der Keilscheibe 101a auf der Basis I , wie auch die Bewegung der Keilscheibe 101 b gegenüber dem Funktionsträgersystem (III) und auch die Bewegung des Funktionsträgersystems (III) gegenüber der ortsfesten und/oder der beweglichen Peripherie (VI) verhindert beziehungsweise blockiert werden können. Die erfindungsgemäße Vorrichtung weist weiter - wie bereits erläutert eine Antriebseinheit 109 auf, in die gem. Fig. 7c die form- und kraftschlüssigen Maschinenelemente als Drehmomentstütze und/oder Feststellvorrichtungen integriert sind, vorzugsweise ausgeführt als Frelläufe beziehungsweise Rücklaufsperren 109c und 109d mit einem Verbindungselement 109e. Die Antriebseinheit 109 weist dazu eine Drehmomentstütze beziehungsweise Feststellvorrichtung oder eine form- und/oder kraftschlüssig Sperre 109c auf, beispielsweise Frelläufe, Bremsen, Kupplungen, Ratschen und/oder dergleichen Feststellvorrichtungen beziehungsweise Maschinenelemente mit Drehrichtung hemmender und/oder verhindernder Wirkung, mit der die manuell oder motorisch herbeigeführten mehrachsigen Winkel- beziehungsweise Drehwinkelverschiebungen, -bewegungen und/oder -veränderungen mindestens einer Keilscheibe 101a oder 101b gezielt unterstützt, zugelassen und/oder verhindert werden können. Bevorzugt Ist die Ausgestaltung der Sperre 109c als Freilauf, der die relative Drehwinkelverschlebung und/oder -bewegung der Keilscheibe 101a gegenüber der Keilscheibe 101b drehrichtungsabhängig gezielt zulässt beziehungsweise verhindert. Die Antriebseinheit 109 weist vorzugsweise eine weitere Sperre 109d auf, die vorzugsweise als Freilauf ausgeführt ist, der die Drehwinkelverschiebung und/oder -bewegung der Keilscheibe 101a gegenüber der Basis (I) drehrichtungsabhängig gezielt zulässt oder verhindert.

Die Sperren 109c und 109d als Teile der Antriebseinheit 109 sind mittels des Verbindungselements 109e miteinander, mit der Antriebseinheit 109 und mit der Basis (I) so verbunden, dass mittels der Kellscheiben 101a und 101b und der Antriebseinhelt 109 mehrachsige Drehwinkelverschiebungen und -bewegungen sowie die Veränderung des Neigungswinkels β beziehungsweise die Schräglage des Funktionsträgersystems (III) oder - wie vorllegend die Schräglage der Vorrichtung über die Wahl der Drehrichtung einerseits und durch die jeweiligen Drehwinkel (+γ und - γ) vorzugsweise mit nur einer Antriebseinheit 109 gezielt herbeigeführt oder verhindert werden00 können.

Die Vorrichtung weist ein Drehwinkelblockiersystem in Form einer Drehmomentstütze 107b auf., mit der die Zielebene (Funktionsträgersystem III), das heißt die Tragfläche, gegenüber der Peripherie so gehalten beziehungsweise geführt werden kann, dass einerseits eine bis zu 5-achsige Bewegungsfreiheit besteht, andererseits Jedoch ein Mitdrehen der Zielebene um die Zielachse in allen Schräg- und Winkel- und Kipplagen verhindert wird.

Weiter weist die Vorrichtung seitens des Funktionsträgersystems (III), auch Tragfläche, Funktionsträgerebene, Funktionstragwerk, Zielebene, Trägerebene oder Kopfebene genannt, Mittel auf, welche mit der mechanischen Verstelleinheit und/oder der konstruktiven Ausführung (II), insbesondere mit einer Keilscheibe 101 b fest verbunden oder vorteilhaft beweglich oder feststellbar mit dieser verbunden oder auf dieser gelagert ist. Diese Mittel des Funktionsträgersystems (III) umfassen vorzugsweise Vorrichtungen zur Positionierung beziehungsweise Befestigung z. B von Photovoltalkmodulen, und sind vorzugsweise zentral seitens des Funktionsträgersystems (III) angeordnet beziehungsweise anordbar.

Das Funktionsträgersystem (III), also die Tragfläche Im Sinne der vorliegenden Erfindung, weist ein Positionswinkelelement 131 auf, welches vorzugsweise mit der Kellscheibe 101b oder der Drehachse 106, der Keilscheibenachse 105 oberhalb des Wellengelenkes 109b verbunden angeordnet ist. Die Drehwinkellage des Positionswinkelelementes 131 repräsentiert die Drehwinkellage der Keilscheiben zueinander (Relativverschiebung) in der Keilscheibenverbindungsebene 102, erreichbar beziehungsweise bewirkbar durch Drehung der Keilscheibenachse 105, und damit den Neigungswinkels □ der Funktionsträgerebene 104.

Die erfindungsgemäße Vorrichtung weist vortellhafterweise ein mechanisches Schräglagen-Positionswinkelelement 131 auf, welches auch optisch den Nelgungwinkel der Funktionsträgerebene anzeigt und/oder eine entsprechende Drehgeberfunktionalltät aufweist. Das Positionswinkelelement 131 weist vorzugsweise eine Anzelgefunktion des Neigungswinkel β auf. Das Positionswinkelelement 131 weist vorzugsweise eine Drehgeberfunktion beziehungsweise -funktionalität auf und ist vorzugsweise so ausgebildet, dass es als Teil eines Drehgebersystems genutzt werden kann, um den Neigungswinkel β zu erfassen.

Die Vorrichtung kann eine Steuerung (VII), also eine Einrichtung zum Messen, Regeln und/oder Steuern der Einrichtungen und/oder Vorrichtungen der erfindungsgemäßen Golfübungsvorrichtung aufweisen, die die manuell oder motorisch herbeigeführten mehrachsigen Winkel- beziehungsweise Drehwinkelverschiebungen, -bewegungen und/oder -veränderungen schaltet, misst, regelt, steuert oder die Daten- oder Signalübertragung auszuführen vermag und/oder das Bewegungsereignis über analoge oder digitale Technik darstellbar macht. Die Steuerung (VII) weist vorzugsweise ein Schräglagen-Positionsbestimmungs- und/oder -übertragungssystem auf. Das Schräglagen-Positionsbestimmungs- und/oder -übertragungssystem weist vorzugsweise mindestens einen Drehgeber oder ein Positionsgebersystem auf. Dieses kann sowohl an der Basis (I), der mechanischen Versteileinheit (II), dem Funktionsträgersystem (III), dem Antriebsystem (IV). Der Drehgeber des Drehgeber- oder Positionsgebersystems ist vorzugsweise mit der Keilelementwelle 105 oder der Antriebswelle 109a oder den Drehlagern verbunden.

Der Drehgeber ist vorzugsweise als Geberelement für die relative Drehwinkeländerung γ zwischen der Keilscheibe 101a und der Keilscheibe 101b, die vorliegend die Veränderung des Neigungswinkels β repräsentiert, ausgebildet. Der Drehgeber beziehungsweise die Drehgeberfunktion kann als Ist-Wert-Geber eingesetzt werden und vorzugsweise die Ist-Werte des Neigungswinkels β auf eine Neigungswinkel Ist-Wert-Anzeige übertragen, Ferner kann das Drehgeber-oder Positionsgebersystem einen Drehgeber beziehungsweise eine Drehgeberfunktion aufweisen, die vorzugsweise die gemeinsame Drehwinkel Änderung γ beider Keilscheiben 101a und 101b registriert, die die Veränderung der Drehwinkellage beziehungsweise die Veränderung des Positionswinkels π um die Achse 106 repräsentiert. Der Drehgeber mit Drehgeberfunktion repräsentiert eine Ist-Wert-Geber-Funktion und hat vorzugsweise eine Ist-Wert-Übertragungsfunktion des Positionswinkeis π für die Übertragung auf die Ist-Wert-Anzeige. Die Drehgeber beziehungsweise Drehgeberfunktionen weisen vorzugsweise auch eine Geberfunktion für die Soil-Ist-Wert-Steuerungs- oder -Signaleinheit auf. Das Drehgeber- oder Positionsgebersystem weist eine Ist-Wert-Geber-Funktion und/oder eine Ist-Wert-Übertragungs-Funktion für übergeordnete Steuerungs-, Datenverarbeitungs- und/oder für Übertragungszwecke auf. Das Drehgeber- oder Positionsgebersystem weist weiter vorzugsweise eine Netz gebundene oder kabellose Signalübertragung auf.

Die Steuerung (VII) weist vorzugsweise ein Motorsteuerungssystem auf. Das Motorsteuerungssystem weist eine Netz gebundene oder kabellose Signalübertragung auf. Das Motorsteuerungssystem weist vorteilhafterweise eine kabellose, Insbesondere als Funksteuerung oder mittels Infrarot (IR) ferngesteuert ausgeführte Signalübertragung auf. Das Motorsteuerungssystem weist bevorzugt eine Funksteuerung zur Signalübertragung.

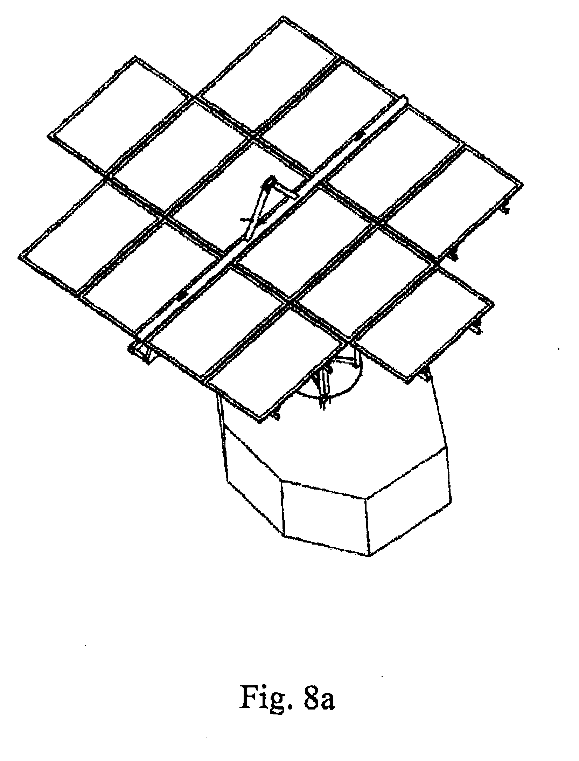

Die in Fig. 8a bis 8h dargestellte bevorzugte Ausführung in perspektivischer Darstellung zeigt die Relatovverdrehung von 0°, 40", 80°, 120° und 180° der keilförmigen Elemente einer Ausführungsform einer erfindungsgemäßen Vorrichtung für ein Nachführsystem für Solar-, Antennen- oder Funkanlagen sowie eine bevorzugte Ausführung des Tragsystems in Fig. 8b mit 2-Punkt-, 3-Punkt und 4-Punkt-Gittertraversen und Gittermast.

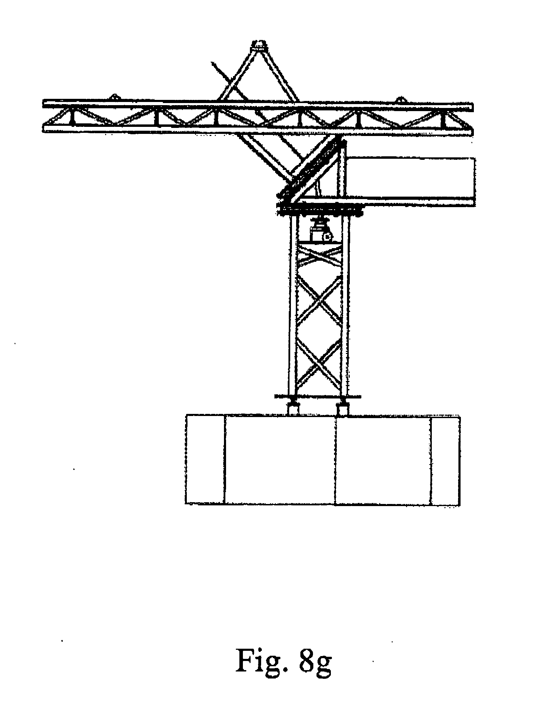

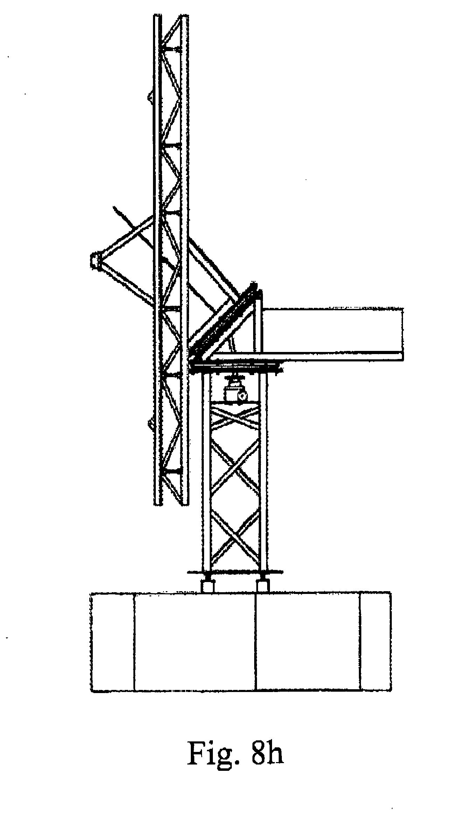

In den Fig. 8g und 8h ist die Gegenüberstellung der Relativverdrehung 0° und 180° der keilförmigen Elemente entsprechend der Ausgangsposition 0° Grad Schräglage und 90° Schräglage in der Ausführungsform einer erfindungsgemäßen Vorrichtung, in der die wirksamen Keilwinkel α9 und α10 vorzugsweise je 45° sind.

### Die erfindungsgemäße Vorrichtung weist die nachfolgenden Vorteile auf:

Die Einstellung von mehrachsigen Dreh- oder Kippwinkein sowie die Ausrichtung der Zielrichtung beziehungsweise der Faillinie der Funktionsebene ist stufenlos und präzise auch unter Verwendung einer einzigen ortsfesten Antriebseinheit durch einfache Rechts-Linkslauf-Änderung der Antriebsachse möglich.

Die Winkelgenauigkeit ist durch das Keilscheibenprinzip erwirkte Zwangsführung der Kipplagen und durch die jewellige Wahl der Keilelementwinkel gesteigert, da auch kleine bis maximale Kippwinkel immer "vergrößert" auf der 180°-Skala der Drehwinkeldifferenz. zwischen den Keilscheiben abgebildet werden, so dass sich mit dem Keilschelbenprinzip unter anderem auch Präzisionswinkellehren verwirklichen lassen.

Kippwinkel lassen sich durch Drehwinkel repräsentieren und vereinfachen die messtechnische Ausstattung.

Die Mechanik (manuelle Betätigung) beziehungsweise die Antriebsgestaltung (Getriebe und Motoren) zur winkelgenauen Nachführung und Einstellung von mehrachsigen Winkel- beziehungsweise Drehwinkelverschlebungen, -bewegungen und -veränderungen ist weniger aufwendig als herkömmliche Systeme und dadurch preiswerter.

Der Betrieb zur Nachführung und Einstellung von mehrachsigen Dreh- oder Kippwinkeln erzeugt nur geringe Lärmpegel und ist durch die Möglichkeit, gänzlich auf pneumatische oder hydraulische Antriebe verzichten zu können und den Steuerungsaufwand für das Antriebsystem reduzieren zu können, gekennzeichnet,

Mit der Möglichkeit der Horizontalstellung der Funktionsfläche lassen sich die schädlichen Einflüsse von Starkwind vermeiden.

Mit der Möglichkeit der Vertikalstellung der Funktionsfläche lassen sich die schädlichen Einflüsse von Schneelasten vermeiden.

Von Vorteil gegenüber den bekannten Vorrichtungen zur Nachführung von Solar, Antennen- oder Funkanlagen ist, dass die Einstellbarkeit der Neigung der Tragfläche solcher Funktionseinhelten nicht mit leistungsstarken Antrieben erfolgen muss, um Gewichts- und Windlasten bei Verstellung zu überwinden.

Von Vorteil gegenüber den bekannten Vorrichtungen zur Nachführung von Solar, Antennen- oder Funkanlagen Ist, dass die Einstellbarkeit der Neigung der Tragfläche solcher Funktionseinheiten wie bevorzugt von 0° bis 90° erfolgen kann, um Gewichts- und Windlasten durch Verstellung zu vermindern und um Schäden zu vermeiden.

Die in den Figuren der Zeichnung dargestellten Ausführungsbeispiele dienen lediglich der Erläuterung der Erfindung und sind für diese nicht beschränkend.

### Bezugszelchenliste:

- 1: keilförmiges Element
- 2: keilförmiges Element
- 3: keilförmiges Element
- 4: keilförmiges Element
- 5: keilförmiges Element
- 6: keilförmiges Element
- 7: keilförmiges Element
- 8: kellförmlges Element
- 9: Basis/Boden
- 10: Tragfläche
- 11: Lager (Tragfläche (10)
- F1: Funktionsfläche (keilförmiges Element (1))
- F2: Funktionsfläche (keilförmiges Element (2))
- F3: Funktionsfläche (keilförmiges Element (3))
- F4: Funktionsfläche (kellförmlges Element (4))
- F5: Funktionsfläche (keilförmiges Element (5))
- F6: Funktionsfläche (keilförmiges Element (6))
- F7: Funktionsfläche (keilförmiges Element (7))
- F8: Funktionsfläche (keilförmiges Element (8))
- G1: gegenüberliegende Seite/Fläche (keilförmiges Element (1))
- G2: gegenüberliegende Seite/Fläche (keilförmiges Element (2))
- G3: gegenüberliegende Seite/Fläche (keilförmiges Element (3))
- G4: gegenüberliegende Seite/Fläche (keilförmiges Element (4))
- G5: gegenüberliegende Seite/Fläche (keilförmiges Element (5))
- G6: gegenüberliegende Seite/Fläche (keilförmiges Element (6))
- G7: gegenüberliegende Seite/Fläche (keilförmiges Element (7))
- G8: gegenüberilegende Seite/Fläche (keilförmiges Element (8))
- L1: Lagerfläche (keilförmiges Element (1))
- L2: Lagerfläche (keilförmiges Element (2))
- L3: Lagerfläche (keilförmiges Element (3))
- L4: Lagerfläche (keilförmiges Element (4))
- α1: Winkel (keilförmiges Element (1))
- α2: Winkel (keilförmiges Element (2))
- α3: Winkel (keilförmiges Element (3))
- α4: Winkel (keilförmiges Element (4))
- α5: Winkel (keilförmiges Element (5))
- α6: Winkel (keilförmiges Element (6))
- α7: Winkel (keilförmiges Element (7))
- α8: Winkel (keilförmiges Element (8))
- α9: Winkel (keilförmiges Element 206)
- α10: Winkel (keilförmiges Element 202)
- β1: Winkel (keilförmiges Element (1) und keilförmiges Element (2))
- β2: Winkel (keilförmiges Element (3) und keilförmiges Element (4))
- β3: Winkel (keilförmige Elemente (5 bis 8))
- γ: Winkel (rechter Winkel)
- γ: relative Drehwinkeländerung eines keilförmigen Elements (2) gegenüber keilförmigem Element (1)
- π: Positionswinkel oder gemeinsame Drehwinkeländerung zweier keilförmiger Elemente (1) und (2) zur Ausrichtung der Zielrichtung oder Falllinie einer Funktionsfläche
- I: Basis
- II: mechanischen Versteileinheit
- III: Funktionsträgersystem
- IV: Antriebsystem
- V: Verbindungssystem
- VI: Peripherie
- VII: Steuerung
- 101a: keilförmiges Element oder keilförmige Konstruktion
- 101b: keilförmiges Element oder keilförmige Konstruktion
- 102: Keilelementverbindungsebene
- 103: Verbindungsebene von Basis I und Keilelement 101a
- 104: Funktionsträgerebene
- 105: Drehachse des keilförmigen Elementes (101 b)
- 106: Antriebsachse
- 107: Bedienungsvorrichtung
- 107b: Drehmomentstütze
- 108: teleskopartiges System zwischen Funktionsträgerebene 104 und Peripherie VI
- 109: Antriebseinheit
- 109a: Drehachse des keilförmigen Elementes (101 a) oder Abtriebsachse des Getriebes (110b)
- 109b: Wellengelenk oder Gelenkwelle
- 109c: Freilauf beziehungsweise Rücklaufsperre
- 109d: Freilauf beziehungsweise Rücklaufsperre
- 109e: Verbindungselement zwischen Linkslauf blockierendem Freilauf 109c und Rechtslauf blockierendem Frellauf 109d
- 110a: Antriebsmotor
- 110b: Getriebe
- 111a: Speichenring
- 111b: Speichen
- 112: Antrieb oder Untersetzungsstufe, die mit Kettenrad einschließlich Antriebskette oder mit Keil- oder Zahnriemenscheibe einschließlich Keilbeziehungsweise Zahnriemen ausgeführt sein kann
- 112a: Antriebsmotor
- 130: zentrale Vorrichtung zur Positionierung von Golfbällen
- 131: mechanisches Schräglagen-Positonswinkelelement
- 132: separate Sekundärebene
- 201: Drehachse oberes Keilelement Fig. 6d
- 202: oberes Keilelement Fig. 6d
- 203: Massenschwerpunkt obere Funktionseinheit Fig. 6d
- 204: obere Funktionseinheit aus 202, 204a und 204b Fig. 6d
- 204a: Tragkonstruktion Fig. 6d
- 204b: Nutzlast und Funktionselemente Fig. 6d
- 205: oberes Drehlager Fig. 6d
- 206: unteres Keilelement Fig. 6d
- 207: Exzentrizität oberes Drehlager gegenüber unterem Drehlager Fig. 6d
- 208: unteres Drehlager Fig. 6d
- 209: Drehachse unteres Keilelement Fig. 6d
- 210: Exzentrizität Massenschwerpunkt aus 204a und 204b gegenüber oberem Drehlager Fig. 6d
- 211: Verbindungselemente für obere Funktionseinheit Fig. 6d
- 212: Basis der Vorrichtung Fig. 6d

## Patentansprüche

1. Vorrichtung zur Bereitstellung von Funktionsflächen zur Einstellung von Solar- und/oder Antennenanlagen, mit einer im wesentlichen ebenen, bereitstellenden Tragfläche (10, 204b) für vorzugsweise Photovoltaikmodule, wobei die Lage der Tragfläche (10, 204b) zum Untergrund (9) einstellbar ist, aufweisend wenigstens zwei an- oder aufeinander drehbar gelagerte, keilförmig ausgebildete, mit Drehlagern verbundene Elemente (1, 2; 3, 4; 5, 6, 7 8), mit jeweils unter einem spitzen Winkel (α1, α2, α3, α4, α5, α6, α7, α8) zusammenlaufender Lagerfläche (L1; L2; L3; L4) und Funktionsfläche (F1, F2; F3, F4; F5, F8, 9, 10), deren Lage zueinander durch relative Verdrehung einstellbar ist, wobei die Lagerflächen (L1; L2; L3; L4) der keilförmigen Elemente (1, 2; 3, 4; 5, 6, 7 8) einander zugewandt sind, die Funktionsflächen (F1, F2; F3, F4; F5, F8) der keilförmigen Elemente (1, 2; 3, 4; 5, 6, 7, 8) voneinander abgewandt sind und durch relative Verdrehung der kellförmigen Elemente (1, 2; 3, 4; 5, 6, 7 8) gegeneinander die Lage der Funktionsflächen (F1, F2; F3, F4; F5, F8) der keilförmigen Elemente (1, 2; 3, 4; 5, 6, 7 8) zueinander einstellbar ist, wobei eine der Funktionsflächen vorzugsweise drehbar an oder auf dem Untergrund (Basis, 9) und die andere Funktionsfläche die Tragfläche (10, 204b) ausbildet oder ein Auflager für die Tragfläche (10) bereitstellend ausgebildet Ist, **gekennzeichnet durch**
Drehlager (205) zwischen den keilförmigen Elementen (202 und 206) und der Basis (212), die auch als Unterkonstruktion oder Stütze oder Mast ausgeführt sein kann, wobei die Relativposition des Drehlagers (205) zwischen dem oberem Kellelement (202) und dem unteren Keilelement (206) so gewählt ist, dass die Drehachse (201) des oberen Drehlagers (205) sich etwa mit dem Masseschwerpunkt (203) der gesamten oberen Funktionseinheit (204) einschließlich Nutzlast (204b), die vorzugsweise aus Photovoltalkmodulen bestehen kann, schneiden.

2. Vorrichtung nach Anspruch 1, **gekennzeichnet durch** die Anordnung des oberen Lagers (205) mit solcher Exzentrizität (207) auf dem unteren Keilelement (206), dass Kollisionen auch bei vorzugsweise 180° Relativdrehung des oberen Keilelementes (204a) gegenüber dem unteren Keilelement (206) vermieden werden, vorzugsweise derart, dass die Funktionsebene (204c) neben der gewünschten Schräglagenerzeugung zusätzlich eine definierte taumelnde Bewegung ausführt, Insbesondere ohne dass sich eine wesentliche Vertikalbewegung des Massenschwerpunktes (203) einstellt, wobei sich der Massenschwerpunkt vorzugsweise auf einer annähernd horizontalen Kreisbahn **durch** die Drehung der beiden Keilelemente (202 und 206) gemeinsam auf dem unteren Drehlager (208) um die Drehachse (209) bewegt.

3. Vorrichtung nach Anspruch 1 oder Anspruch 2, **dadurch gekennzeichnet, dass** durch relative Verdrehung der keilförmigen Elemente (1, 2; 3, 4; 5, 6, 7 8) gegeneinander der Winkel (β1; β2; β3) zwischen den Funktionsflächen (F1, F2; F3, F4; F5, F8) der keilförmigen Elemente (1, 2; 3, 4; 5, 6, 7 8) einstellbar ist.

4. Vorrichtung nach einem der Ansprüche 1 bis 3, **dadurch gekennzeichnet, dass** wenigstens zwei Paare keilförmiger Elemente (5, 6; 7, 8) an- oder aufeinander drehbar gelagert sind, wobei die einander zugewandten Funktionsflächen der beiden Paare keilförmiger Elemente als Lagerflächen dienen.

5. Vorrichtung nach einem der Ansprüche 1 bis 4, **dadurch gekennzeichnet, dass** der Winkel (α1, α2, α3, α4, α5, α6, α7, α8) zwischen der Lagerfläche (L1, L2, L3, L4) und der Funktionsfläche (F1, F2, F3, F4, F5, F8) eines keilförmigen Elementes (1, 2, 3, 4, 5, 6, 7, 8) vorzugsweise etwa 45° oder ein ganzzahliges Vielfaches von etwa 9° beträgt.

6. Vorrichtung nach einem der Ansprüche 1 bis 5, **dadurch gekennzeichnet, dass** die keilförmigen Elemente (1, 2, 3, 4, 5, 6, 7, 8) stufenlos gegeneinander verdrehbar sind.

7. Vorrichtung nach einem der Ansprüche 1 bis 6, **dadurch gekennzeichnet, dass** die keilförmigen Elemente (1, 2, 3, 4, 5, 6, 7, 8) stufenweise um definierte Winkel gegeneinander verdrehbar sind, vorzugsweise um Winkel von 1° bis 15°, besonders bevorzugt um Winkelstufen von 2° oder einem Vielfachen von 2°.

8. Vorrichtung nach einem der Ansprüche 1 bis 7, **dadurch gekennzeichnet, dass** das Maß für die Lage der Funktionsflächen (F1, F2; F3, F4, F5, F8) der keilförmigen Elemente (1, 2, 3, 4, 5, 6, 7, 8) zueinander und/oder der Verdrehung der keilförmigen Elemente (1, 2, 3, 4, 5, 6, 7, 8) gegeneinander mechanisch und/oder elektronisch erfassbar und/oder wiedergebbar ist.

9. Vorrichtung nach einem der Ansprüche 1 bis 8, **dadurch gekennzeichnet, dass** wenigstens ein Drehlager zwischen den keilförmigen Elementen (1, 2, 3, 4, 5, 6, 7, 8) und/oder dem keilförmigen Element (1) und der Basis (9) in einer und/oder In beiden Drehrichtungen festlegbar oder unabhängig von den anderen keilförmigen Elementen drehbar Ist.

10. Vorrichtung nach einem der Ansprüche 1 bis 9, **gekennzeichnet durch** wenigstens und vorzugsweise nur einen Antrieb zum Drehen wenigstens eines keilförmigen Elementes (1, 2, 3, 4, 5, 6, 7, 8) um sein Drehlager oder um seine Drehachse, vorzugsweise einen elektrischen, pneumatischen und/oder hydraulischen Antrieb.

11. Vorrichtung nach Anspruch 10, **dadurch gekennzeichnet, dass** der Antrieb ein ein- und/oder mehrstufiges Getriebe zur Unter- und/oder Übersetzung von Drehbewegungen auf das wenigstens eine keilförmige Element (1, 2, 3, 4, 5, 6, 7, 8) umfasst.

12. Vorrichtung nach einem der Ansprüche 1 bis 11, **dadurch gekennzeichnet, dass** die Verdrehung der keilförmigen Elemente (1, 2, 3, 4, 5, 6, 7, 8) gegeneinander steuerbar ist, vorzugsweise mittels des wenigstens einen Antriebs zum Drehen wenigstens eines keilförmigen Elementes (1, 2, 3, 4, 5, 6, 7, 8) um sein Drehlager.

13. Vorrichtung nach einem der Ansprüche 1 bis 12, **gekennzeichnet durch** Drehlager zwischen den keilförmigen Elementen, dem Untergrund (9) und/oder der Tragfläche (10), wobei die Relativposition der Drehlager so gewählt ist, dass die Drehachsen der Lager sich etwa in einem Punkt (Pol, Drehpol) der freien Funktionsfläche schneiden,

14. Vorrichtung nach einem der Ansprüche 1 bis 13, **dadurch gekennzeichnet, dass** die auf der ein Auflager für die Tragfläche (10) bereitstellenden Funktionsfläche aufgelagerte Tragfläche (10) mit einer Drehmomentstütze (117b) gehalten und/oder geführt sein kann.
